# EUROPEAN PATENT APPLICATION

(11) **EP 4 283 782 A1**
(43) Date of publication of application: **29.11.2023**
(21) Application number: 22770508.4
(22) Date of filing: 15.03.2022
(51) Int. Cl.: H01Q 1/50, H01Q 5/10, H01Q 5/28, H01Q 5/328, H01Q 1/22, H01Q 1/24, H01Q 1/36

(54) **ANTENNA AND COMMUNICATION DEVICE**

(30) Priority: 16.03.2021 CN 202110283470
(71) Applicant: Huawei Technologies Co., Ltd., Shenzhen, Guangdong 518129 (CN)
(72) Inventor: CAI, Xiaotao, Shenzhen, Guangdong 518129 (CN); ZHOU, Dawei, Shenzhen, Guangdong 518129 (CN); WANG, Hanyang, Shenzhen, Guangdong 518129 (CN)
(74) Representative: Pfenning, Meinig & Partner mbB
(86) International application number: PCT/CN2022/080969
(87) International publication number: WO 2022/194155

(57) **Abstract**

Embodiments of this application provide an antenna and a communication device. The antenna includes a first radiator, a second radiator, a first feed, a first feeder, and a second feeder. The first feed is configured to connect to a radio frequency front-end, and the first feed is electrically connected to the first radiator through the first feeder, and is electrically connected to the second radiator through the second feeder. When the antenna is in a first operating mode, the first feed feeds a radio frequency signal into the first radiator and the second radiator, the first radiator and the second radiator receive radio frequency signals with a same phase, the first radiator and the second radiator are coupled to each other, and single resonance is generated. The antenna shown in embodiments of this application can obtain a low SAR value, which has little impact on a human body.

## Description

This application claims priority to Chinese Patent Application No. 202110283470.3, filed with the China National Intellectual Property Administration on March 16, 2021 and entitled "ANTENNA AND COMMUNICATION DEVICE", which is incorporated herein by reference in its entirety.

### TECHNICAL FIELD

This application relates to the field of communication technologies, and in particular, to an antenna and a communication device.

### BACKGROUND

With rapid development of wireless communication technologies, people are increasingly dependent on communication devices. However, when the communication device is close to a human body, a specific absorption rate (specific absorption rate, SAR) of electromagnetic radiation of an antenna is large, and electromagnetic power absorbed or consumed by the human body is large, which has great impact on the human body.

### SUMMARY

According to a first aspect, this application provides an antenna, including a first radiator, a second radiator, a first feed, a first feeder, and a second feeder. The first feed is configured to connect to a radio frequency front-end, and the first feed is electrically connected to the first radiator through the first feeder, and is electrically connected to the second radiator through the second feeder.

When the antenna is in a first operating mode, the first feed feeds a radio frequency signal into the first radiator and the second radiator, the first radiator and the second radiator receive radio frequency signals with a same phase, the first radiator and the second radiator are coupled to each other, and single resonance is generated. In this case, currents near the first radiator and the second radiator are distributed evenly, and the first radiator and the second radiator may be fully excited. This helps decrease an SAR value of the antenna, and improve antenna efficiency and beside head and hand performance of the antenna.

In an implementation, the antenna further includes a switch. The switch is disposed on the second feeder, and is connected between the first feed and the second radiator.

When the switch is turned on, the antenna is in the first operating mode.

When the switch is turned off, the antenna is in a second operating mode, the first feed feeds the radio frequency signal into the first radiator, and the first radiator is coupled to and excites the second radiator. In this case, the second radiator is used as a parasitic radiator of the first radiator, and a current near the first radiator is strong, and a current near the second radiator is weak, that is, currents near the first radiator and the second radiator are distributed unevenly.

By controlling the switch to be turned off or turned on, the first radiator can be separately excited, or the first radiator and the second radiator can be simultaneously excited, so as to control switching between the first operating mode and the second operating mode of the antenna, and a current distribution status of the currents near the first radiator and the second radiator can be further changed. This helps improve antenna efficiency and beside head and hand performance of the antenna, and optimize a specific absorption rate characteristic of the antenna.

In an implementation, the antenna further includes a plurality of phase shifters. The plurality of phase shifters are disposed in parallel on the second feeder, and are connected between the switch and the second radiator. Phase adjustment values of the plurality of phase shifters are different. The switch is connected to different phase shifters in a switchable manner, to adjust a phase of the radio frequency signal fed by the first feed into the second radiator.

By controlling switching of the switch, the phase shifters with the different phase adjustment values may be connected to the second feeder, so as to adjust a phase difference between the radio frequency signals fed by the first feed into the first radiator and the second radiator, and control switching of an operating mode of the antenna. This helps improve antenna efficiency and beside head and hand performance of the antenna, and optimize a specific absorption rate characteristic of the antenna.

In an implementation, there are three phase shifters, a phase adjustment value of one of the phase shifters is 0 degree, a phase adjustment value of one of the phase shifters is 90 degrees, and a phase adjustment value of one of the phase shifters is 180 degrees.

In an implementation, the antenna further includes a phase regulator. The phase regulator is disposed on the second feeder, and is connected between the switch and the second radiator.

When the switch is turned on, the phase regulator adjusts a phase of the radio frequency signal fed by the first feed into the second radiator.

By controlling the switch to be turned off or turned on, the phase regulator may be connected to the second feeder, so as to adjust a phase difference between the radio frequency signals fed by the first feed into the first radiator and the second radiator, and control switching of an operating mode of the antenna. This helps improve antenna efficiency and beside head and hand performance of the antenna, and optimize a specific absorption rate characteristic of the antenna.

In an implementation, the first feed is a full-band feed. To be specific, the first feed is a feed covering three bands: a medium band, a medium band, and a high band.

In an implementation, the first feed is a medium- and high-band feed, the antenna further includes a second feed and a third feeder, the second feed is configured to connect to the radio frequency front-end, the second feed is electrically connected to the second radiator through the third feeder, and the second feed is a low-band feed.

It should be understood that a medium- and high-band radio frequency signal has great impact on the SAR value of the antenna. The antenna is fed in a manner in which a medium- and high-band signal and a low-band signal are separately fed. This is more conducive to adjustment of the medium- and high-band radio frequency signal, and is conducive to optimization of a specific absorption rate characteristic of the antenna.

In an implementation, the antenna further includes a first filter and a second filter. The first filter is disposed on the second feeder, and is connected between the first feed and the second radiator, to filter a low-band radio frequency signal. The second filter is disposed on the third feeder, and is connected between the second feed and the second radiator, to filter a medium- and high-band radio frequency signal.

In an implementation, the antenna further includes a first tuning circuit. One end of the first tuning circuit is grounded, and the other end is connected to the first radiator. The first tuning circuit is configured to adjust an electrical length of the first radiator, to change a resonance frequency of the first radiator, so that the first radiator can switch between different operating bands based on an actual requirement, and the antenna can cover different operating bands.

In an implementation, the first tuning circuit includes a plurality of different first tuning elements and a first switching switch. The plurality of different first tuning elements are all connected to the first radiator. One end of the first switching switch is grounded, and the other end is connected to the different first tuning elements in a switchable manner. The different first tuning elements are connected to the first radiator, so as to adjust the electrical length of the first radiator.

The first tuning element is a tuning element like a capacitor, an inductor, or a resistor.

In an implementation, the antenna further includes a second tuning circuit. One end of the second tuning circuit is grounded, and the other end is connected to the second radiator. The second tuning circuit is configured to adjust an electrical length of the second radiator, to change a resonance frequency of the second radiator, so that the second radiator can switch between different operating bands based on an actual requirement, and the antenna can cover different operating bands.

In an implementation, the second tuning circuit includes a plurality of different second tuning elements and a second switching switch. The plurality of different second tuning elements are all connected to the second radiator. One end of the second switching switch is grounded, and the other end is connected to the different second tuning elements in a switchable manner. The different second tuning elements are connected to the second radiator, so as to adjust the electrical length of the second radiator.

The second tuning element is a tuning element like a capacitor, an inductor, or a resistor.

According to a second aspect, this application provides a communication device, including a radio frequency front-end and any one of the foregoing antennas. The radio frequency front-end is connected to a first feed, and is configured to: feed a radio frequency signal into the antenna, and/or receive a radio frequency signal received by the antenna.

In the communication device shown in this application, when the antenna is in a first operating mode, the first feed feeds a radio frequency signal into a first radiator and a second radiator, the first radiator and the second radiator receive radio frequency signals with a same phase, the first radiator and the second radiator are coupled to each other, and single resonance is generated. In this case, currents near the first radiator and the second radiator are distributed evenly, and the first radiator and the second radiator may be fully excited. This helps decrease an SAR value of the antenna, and improve antenna efficiency and beside head and hand performance of the antenna, thereby improving antenna performance of the communication device, improving radio performance in an actual use scenario of a user, and improving use experience of the user.

In an implementation, the communication device includes a frame. The frame includes a first metal segment and a second metal segment that are spaced from each other. The first metal segment forms the first radiator, and the second metal segment forms the second radiator. In other words, parts of the frame may be used as the first radiator and the second radiator of the antenna, so that space occupied by the antenna in the communication device can be reduced.

In an implementation, the communication device includes a frame. The frame is made of a non-metal material. The first radiator and the second radiator are spaced from each other, and both are disposed against the frame, so that space occupied by the antenna in the communication device is reduced.

### BRIEF DESCRIPTION OF DRAWINGS

To describe the technical solutions in embodiments of this application or in the background more clearly, the following describes the accompanying drawings for describing embodiments of this application or the background.
FIG. 1 is a schematic diagram of a structure of a communication device according to an embodiment of this application;
FIG. 2 is a schematic diagram of a partial structure of the communication device shown in FIG. 1;
FIG. 3 is a second schematic diagram of a partial structure of a communication device according to an embodiment of this application;
FIG. 4 is a third schematic diagram of a partial structure of a communication device according to an embodiment of this application;
FIG. 5 is a fourth schematic diagram of a partial structure of a communication device according to an embodiment of this application;
FIG. 6 is a fifth schematic diagram of a partial structure of a communication device according to an embodiment of this application;
FIG. 7 is a diagram of a return loss coefficient curve of an antenna in a free state and efficiency curves of the antenna in different states obtained when a third switch in the communication device shown in FIG. 6 is turned off;
FIG. 8 is a schematic diagram of current distribution obtained when a third switch in the communication device shown in FIG. 6 is turned off;
FIG. 9 is a diagram of a return loss coefficient curve of an antenna in a free state and efficiency curves of the antenna in different states obtained when a first single-pole single-throw switch in the communication device shown in FIG. 6 is turned on;
FIG. 10 is a diagram of current distribution at 2.2 GHz obtained when a first single-pole single-throw switch in the communication device shown in FIG. 6 is turned on;
FIG. 11 is a radiation pattern of an antenna at 2.2 GHz obtained when a first single-pole single-throw switch in the communication device shown in FIG. 6 is turned on;
FIG. 12 is a diagram of a return loss coefficient curve and an efficiency curve of an antenna in a free state obtained when a second single-pole single-throw switch in the communication device shown in FIG. 6 is turned on;
FIG. 13 is a diagram of current distribution at 1.8 GHz obtained when a second single-pole single-throw switch in the communication device shown in FIG. 6 is turned on;
FIG. 14 is a diagram of current distribution at 2.55 GHz obtained when a second single-pole single-throw switch in the communication device shown in FIG. 6 is turned on;
FIG. 15 is a radiation pattern of an antenna at 1.8 GHz obtained when a second single-pole single-throw switch in the communication device shown in FIG. 6 is turned on;
FIG. 16 is a radiation pattern of an antenna at 2.55 GHz obtained when a second single-pole single-throw switch in the communication device shown in FIG. 6 is turned on;
FIG. 17 is a diagram of a return loss coefficient curve of an antenna in a free state and efficiency curves of the antenna in different states obtained when a third single-pole single-throw switch in the communication device shown in FIG. 6 is turned on;
FIG. 18 is a diagram of current distribution at 1.9 GHz obtained when a third single-pole single-throw switch in the communication device shown in FIG. 6 is turned on;
FIG. 19 is a radiation pattern of an antenna at 1.9 GHz obtained when a third single-pole single-throw switch in the communication device shown in FIG. 6 is turned on; and
FIG. 20 is a sixth schematic diagram of a partial structure of a communication device according to an embodiment of this application.

### DESCRIPTION OF EMBODIMENTS

The following clearly and completely describes the technical solutions in embodiments of this application with reference to the accompanying drawings in embodiments of this application.

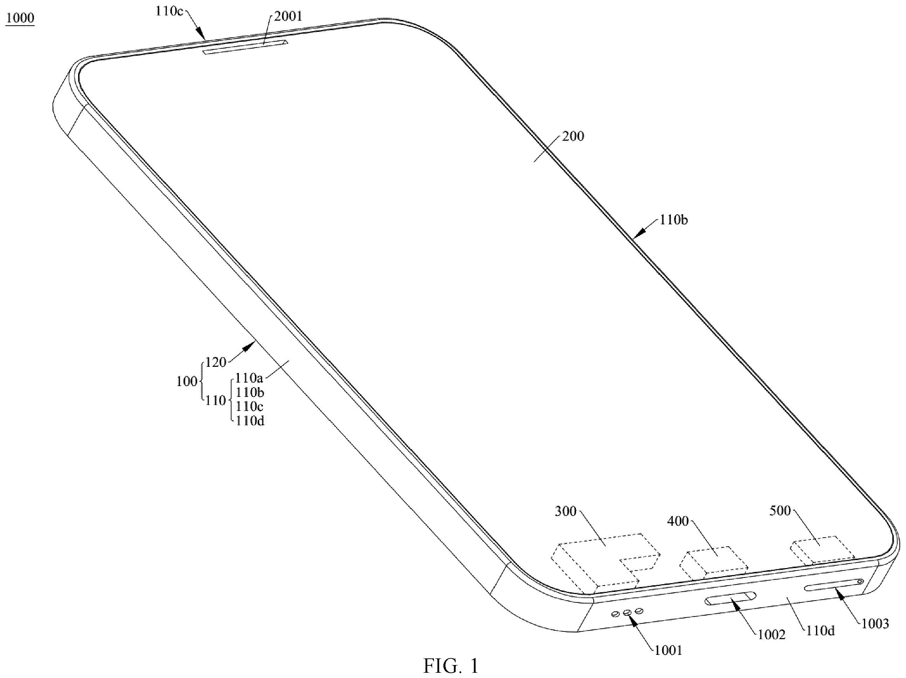

FIG. 1 is a schematic diagram of a structure of communication device 1000 according to an embodiment of this application.

The communication device 1000 may be an electronic product that has a wireless communication function, for example, a handheld device, a vehicle-mounted device, a wearable device, a computer device, a wireless local area network (wireless local area network, WLAN) device, a router, or the like. In some application scenarios, the communication device 1000 may alternatively have different names, for example, user equipment, an access terminal, a subscriber unit, a subscriber station, a mobile station, a mobile console, a remote station, a remote terminal, a mobile device, a user terminal, a wireless communication device 1000, a user agent or a user apparatus, a cellular phone, a wireless telephone, a session initiation protocol (session initiation protocol, SIP) phone, a wireless local loop (wireless local loop, WLL) station, and a personal digital assistant (personal digital assistant, PDA), a terminal device in a 5G network or a future evolved network, or the like. In embodiments of this application, an example in which the communication device 1000 is a mobile phone is used for description.

The communication device 1000 includes a housing 100, a display 200, a receiver (not shown in the figure), a speaker 300, a connector 400, and a card tray 500. The display 200 is mounted on the housing 100. The receiver, the speaker 300, the connector 400, and the card tray 500 are all mounted on an inner side of the housing 100.

The housing 100 may include a frame 110 and a rear cover 120. The rear cover 120 is fastened to one side of the frame 110. The frame 110 and the rear cover 120 may be an integrally formed structure, to ensure structural stability of the housing 100. Alternatively, the frame 110 and the rear cover 120 may be fastened to each other by assembly.

The frame 110 includes a left frame 110a and a right frame 110b that are disposed opposite to each other, and a top frame 110c and a bottom frame 110d that are connected between the left frame 110a and the right frame 110b. The left frame 110a, the bottom frame 110a, the right frame 110b, and the top frame 110c are connected head to tail to form the frame 110 in a square shape. In addition, the frame 110 may have chamfers, to improve appearance exquisiteness of the frame 110, thereby improving appearance exquisiteness of the communication device 1000.

The housing 100 is provided with a speaker hole 1001, a plug-in hole 1002, and a mounting hole 1003. In this embodiment, the speaker hole 1001, the plug-in hole 1002, and the mounting hole 1003 are all provided on the frame 110. Specifically, the speaker hole 1001, the plug-in hole 1002, and the mounting hole 1003 are all provided on the bottom frame 110d. There may be one or more speaker holes 1001. For example, there are a plurality of speaker holes 1001, and each speaker hole 1001 connects an inner side of the housing 100 and an outer side of the housing 100. The plug-in hole 1002 and the speaker hole 1001 are spaced from each other. The mounting hole 1003 is located on a side that is of the plug-in hole 1002 and that is away from the speaker hole 1001, and is spaced from the plug-in hole 1002. Both the plug-in hole 1002 and the mounting hole 1003 connect the inner side and the outer side of the housing 100. It should be noted that the "hole" described in embodiments of this application is a hole having a complete hole wall, and the following descriptions of the "hole" are understood in a same way.

It should be noted that orientation words such as "left", "right", "above", and "below" used to describe the communication device 1000 in embodiments of this application are mainly described based on an orientation in which a user holds and uses the communication device 1000. When the user holds and uses the communication device 1000, an orientation toward the top is "top", an orientation toward the bottom is "bottom", an orientation toward the left is "left", and an orientation toward the right is "right". This does not indicate or imply that a described apparatus or element needs to have a particular orientation or be configured and operated in a particular orientation, and therefore cannot be understood as a limitation on an orientation of the communication device 1000 in an actual application scenario.

The display 200 is fastened to the other side of the frame 110, and is configured to display images, videos, and the like. In other words, the display 200 and the rear cover 120 are respectively fastened to two sides of the frame 110. When the user holds and uses the communication device 1000, the display 200 is placed toward the user, and the rear cover 120 is placed away from the user. A receiver hole 2001 is provided on the display 200, and the receiver hole 2001 is a through hole that penetrates the display 200.

In some other embodiments, a receiver hole may be formed between an edge of the display 200 and the housing 100. For example, the receiver hole 2001 is formed between the display 200 and an edge of the top frame 110c. Alternatively, a receiver hole 2001 is provided on the housing 100. For example, the receiver hole 2001 is provided on the top frame 110c of the housing 100. It should be understood that a specific structure and a location of the receiver hole 2001 are not strictly limited in embodiments of this application.

In this embodiment, the display 200 may be a flexible display, or may be a rigid display. For example, the display 200 may be an organic light-emitting diode (organic light-emitting diode, OLED) display, an active-matrix organic light-emitting diode (active-matrix organic light-emitting diode, AMOLED) display, a mini organic light-emitting diode (mini organic light-emitting diode) display, a micro light-emitting diode (micro organic light-emitting diode) display, a micro organic light-emitting diode (micro organic light-emitting diode) display, a quantum dot light-emitting diode (quantum dot light emitting diodes, QLED) display, or a liquid crystal display (Liquid Crystal Display, LCD).

The receiver is located on the top of the communication device 1000, and a sound emitted by the receiver is transmitted to the outside of the communication device 1000 through the receiver hole 2001, to implement a sound play function of the communication device 1000. The speaker 300, the connector 400, and the card tray 500 are all located at the bottom of the communication device 1000. A sound emitted by the speaker 300 is transmitted to the outside of the communication device 1000 through the speaker hole 1001, to implement the sound play function of the communication device 1000. The connector 400 corresponds to the plug-in hole 1002, and a peer connector (not shown in the figure) may be electrically connected to the connector 400 through the plug-in hole 1002, to implement data transmission or charging of the communication device 1000. The card tray 500 penetrates through the mounting hole 1003, and is configured to load a SIM card. An outer surface of the card tray 500 and an outer surface of the frame 110 may be located on a same surface, to improve appearance exquisiteness of the communication device 1000.

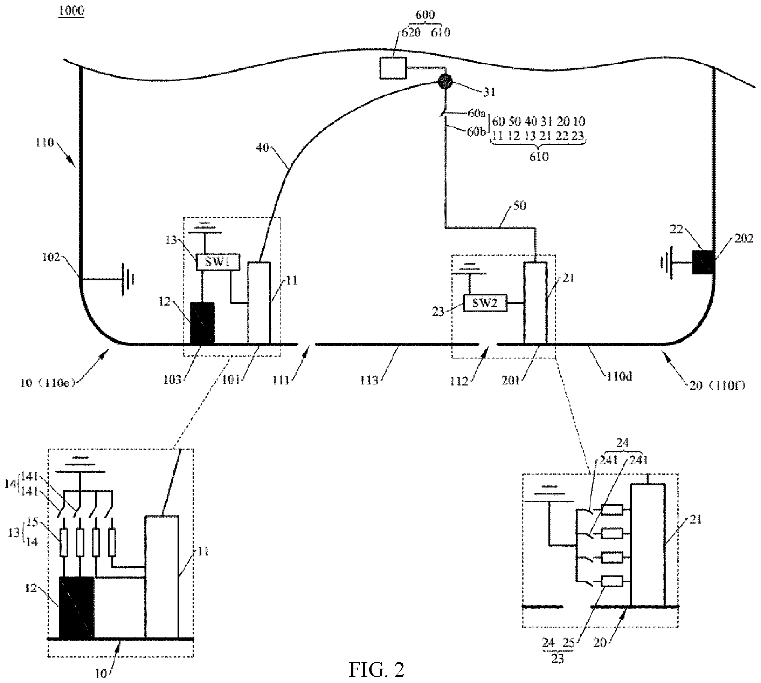

FIG. 2 is a schematic diagram of a partial structure of the communication device 1000 shown in FIG. 1.

The communication device 1000 further includes an antenna module 600. The antenna module 600 includes an antenna 610 and a radio frequency front-end 620. The antenna 610 is configured to radiate a radio frequency signal to the outside or receive a radio frequency signal from the outside, so that the communication device 1000 can communicate with the outside through the antenna. For example, the antenna may be an inverted F-shaped antenna (inverted F-shaped antenna, IFA), a monopole antenna (monopole antenna), a composite right and left hands antenna (composite right and left hands antenna, CRLH antenna), or a loop antenna (Loop antenna). The radio frequency front-end 620 is electrically connected to the antenna 610, and is configured to: feed a radio frequency signal into the antenna 610, or receive an external radio frequency signal received by the antenna 610. It may be understood that, based on different forms of the antenna 610, the radio frequency front-end 620 may optionally feed the antenna 610 in a low impedance feeding manner or a high impedance feeding manner. This is not specifically limited in this application.

In some embodiments, the radio frequency front-end 620 may include a transmit channel and a receive channel (not shown in the figure). The transmit channel may include components such as a power amplifier and a filter. The components such as the power amplifier and the filter may perform processing such as power amplification and filtering on the radio frequency signal, transmit the radio frequency signal to the antenna 610, and transmit the radio frequency signal to the outside through the antenna 610. The receive channel may include components such as a low noise amplifier and a filter. The components such as the low noise amplifier and the filter may perform processing such as low noise amplification and filtering on the external radio frequency signal received by the antenna 610, and transmit the external radio frequency signal to a radio frequency chip, so that the communication device 1000 communicates with the outside through the radio frequency front-end 620 and the antenna 610.

The antenna 610 includes a first radiator 10 and a second radiator 20. Specifically, the first radiator 10 and the second radiator 20 may be coupled to each other. It should be noted that, that the first radiator 10 and the second radiator 20 may be coupled to each other means that when the first radiator 10 feeds a radio frequency signal, the first radiator 10 may be coupled to the second radiator 20, and when the second radiator 20 feeds a radio frequency signal, the second radiator 20 may be coupled to the first radiator 10. For example, both the first radiator 10 and the second radiator 20 are L-shaped. It should be understood that shapes of the first radiator 10 and the second radiator 20 are not limited to the L shapes shown in FIG. 2, and may alternatively be an I shape or another special shape. The shapes of the first radiator 10 and the second radiator 20 are not specifically limited in this application.

In some embodiments, the frame 110 includes a first metal segment 110e and a second metal segment 110f that are spaced from each other. The first metal segment 110e forms the first radiator 10, and the second metal segment 110f forms the second radiator 20. Specifically, the frame 110 may be made of a metal material, and the frame 110 is grounded. A part of the frame 110 may be used as the first radiator 10, and a part of the frame 110 may be used as the second radiator 20, so that space occupied by the antenna 610 is reduced. The bottom frame 110d is provided with a first slot 111 and a second slot 112 that are spaced from each other. The first metal segment 110e is located on a side that is of the first slot 111 and that is away from the second slot 112, and the second metal segment 110f is located on a side that is of the second slot 112 and that is away from the first slot 111. It may be understood that, other parts of the frame 110 other than the first metal segment 110e and the second metal segment 110f may also be used as radiators of other antennas (such as a Wi-Fi antenna or a GPS antenna) of the communication device 1000. In some other embodiments, the frame 110 may also be provided with one slot or more than three slots, provided that the first radiator 10 and the second radiator 20 may be coupled to each other.

In addition, a part that is of the frame 110 and that is located between the first slot 111 and the second slot 112 forms a suspended metal part 113. The first radiator 10 and the second radiator 20 may be coupled to each other via the first slot 111, the suspended metal part 113, and the second slot 112. Widths of the first slot 111 and the second slot 112 are both between 0.5 mm and 0.8 mm. For example, the first slot 111 and the second slot 112 may be filled with a dielectric material, to enhance an effect of electrical isolation between the first radiator 10 and the second radiator 20 and another part of the frame 110.

In some other embodiments, the frame 110 may alternatively be made of a non-metal material. In this case, the frame 110 cannot be used as the first radiator 10 and the second radiator 20 of the antenna 610. The first radiator 10 and the second radiator 20 may be disposed on an inner side of the frame 110. For example, the first radiator 10 and the second radiator 20 are spaced from each other, and are disposed against the frame 110, so that space occupied by the antenna 610 is reduced. In this case, the first radiator 10 and the second radiator 20 are closer to the outside of the communication device 1000. This helps improve signal transmission efficiency of the antenna 610. It should be noted that, that the first radiator 10 and the second radiator 20 are disposed against the frame 110 in this application means that the first radiator 10 and the second radiator 20 may be tightly attached to the frame 110, or may be disposed close to the frame 110, that is, there may be a specific small slot between the first radiator 10 and the second radiator 20 and the frame 110.

In this case, the frame 110 does not need to be provided with the first slot 111 and the second slot 112, and radio frequency signals output or received by the first radiator 10 and the second radiator 20 can be transmitted through the frame 110. This avoids limitation of the frame 110 on transmission of the radio frequency signals. For example, the antenna 610 may be in an antenna form of a flexible printed circuit (flexible printed circuit, FPC), a laser-direct-structuring (laser-direct-structuring, LDS) antenna, a microstrip disk antenna (microstrip disk antenna, MDA), or the like.

The first radiator 10 has a first feed point 101, a first ground point 102, and a first connection point 103. The first feed point 101 is provided at an end that is of the first radiator 10 and that is close to the first slot 111. The first feed point 101 is configured to electrically connect to the radio frequency front-end 620, to feed a radio frequency signal of the radio frequency front-end 620 into the first radiator 10, or transmit a radio frequency signal received by the first radiator 10 to the radio frequency front-end 620. The second ground point 103 is provided at an end that is of the first radiator 10 and that is away from the first slot 111, and is grounded. The first connection point 103 is provided at an end that is of the first feed point 101 and that is away from the first slot 111, and is close to the first feed point 101.

In some embodiments, the antenna 610 further includes a first feeding component 11, a first ground component 12, and a first tuning circuit 13. Specifically, one end of the first feeding component 11 is connected to the radio frequency front-end 620, and the other end is connected to the first radiator 10. The other end of the first feeding component 11 is connected to the first feed point 101. In other words, the radio frequency front-end 620 may be connected to the first feed point 101 of the first radiator 10 through the first feeding component 11. For example, the first feeding component 11 may be a feeding component like a feeding spring or a feeding wire. It should be noted that the first feed point 101 described in embodiments of this application is not an actual point, and a position at which the first radiator 10 is connected to the first feeding component 11 is the first feed point 101. In some other embodiments, the antenna 610 may alternatively not include the first ground component 12.

One end of the first ground component 12 is connected to the first radiator 10, and the other end is grounded. Specifically, one end of the first ground component 12 is connected to the first connection point 103. In other words, the first radiator 10 may be grounded through the first ground component 12. For example, the first ground component 12 may be a ground component like a ground spring or a ground wire. It should be noted that the first connection point 103 described in embodiments of this application is not an actual point, and a position at which the first radiator 10 is connected to the first ground component 12 is the first connection point 103.

One end of the first tuning circuit 13 is connected to the first radiator 10, the other end is grounded, and the first tuning circuit 13 is configured to adjust an electrical length of the first radiator 10. One end of the first tuning circuit 13 is connected to both the first feeding component 11 and the first ground component 12. In this embodiment, the first tuning circuit 13 includes a first switching switch 14 and a plurality of different first tuning elements 15. The plurality of different first tuning elements 15 are all connected to the first radiator 10. One end of the first switching switch 14 is grounded, and the other end is connected to the different first tuning elements 15 in a switchable manner, so as to adjust the electrical length of the first radiator 10. The first tuning element 15 may be a component like a capacitor, an inductor, or a resistor.

For example, there are four first tuning elements 15. The first switching switch 14 includes four single-pole single-throw switches 141, and the four single-pole single-throw switches 141 are connected in parallel. Specifically, one end of each single-pole single-throw switch 141 is grounded. The other ends of two single-pole single-throw switches 141 are connected to the first feeding component 11 through two different first tuning elements 15, and the other ends of the other two single-pole single-throw switches 141 are connected to the first ground component 12 through the other two first tuning elements 15. By adjusting a status of the first switching switch 14, that is, by controlling the four single-pole single-throw switches 141 to be turned off or turned on, the electrical length of the first radiator 10 may be adjusted, so as to change a resonance frequency of the first radiator 10, so that the first radiator 10 can switch between different operating bands based on an actual requirement, and the antenna 610 can cover different operating bands.

In some other embodiments, there may be two, three, or more than five first tuning elements 15. In this case, the first switching switch 14 may correspondingly include two, three, or more than five single-pole single-throw switches. Alternatively, the first switching switch 14 may be another type of switching switch, for example, may include a physical switch like a single-pole multi-throw switch or a multi-pole multi-throw switch, or may be a switchable interface like a mobile industry processor interface (mobile industry processor interface, MIPI) or a general-purpose input/output interface (general-purpose input/output, GPIO).

The second radiator 20 has a second feed point 201 and a second ground point 202. The second feed point 201 is provided at an end that is of the second radiator 20 and that is close to the second slot 112. The second feed point 201 is configured to electrically connect to the radio frequency front-end 620, to feed a radio frequency signal of the radio frequency front-end 620 into the second radiator 20, or transmit a radio frequency signal received by the second radiator 20 to the radio frequency front-end 620. The second ground point 202 is provided at an end that is of the second radiator 20 and that is away from the second slot 112, and is grounded.

In some embodiments, the antenna 610 further includes a second feeding component 21, a second ground component 22, and a second tuning circuit 23. Specifically, one end of the second feeding component 21 is connected to the radio frequency front-end 620, and the other end is connected to the second radiator 20. The other end of the second feeding component 21 is connected to the second feed point 201. For example, the second feeding component 21 may be a feeding component like a feeding spring or a feeding wire. It should be noted that the second feed point 201 described in embodiments of this application is not an actual point, and a position at which the second radiator 20 is connected to the second feeding component 21 is the second feed point 201.

One end of the second ground component 22 is connected to the second radiator 20, and the other end is grounded. Specifically, one end of the second ground component 22 is connected to the second ground point 202. In other words, the second radiator 20 may be grounded through the second ground component 22. For example, the second ground component 22 may be a ground component like a ground spring or a ground wire. In some other embodiments, the antenna 610 may not include the second ground component 22, and the second ground point 202 is directly grounded. It should be noted that the second ground point 202 described in embodiments of this application is not an actual point, and a ground position in the second radiator 20 is the second ground point 202.

One end of the second tuning circuit 23 is connected to the second radiator 20, the other end is grounded, and the second tuning circuit 23 is configured to adjust an electrical length of the second radiator 20. One end of the second tuning circuit 23 is connected to the second feeding component 21. In this embodiment, the second tuning circuit 23 includes a second switching switch 24 and a plurality of different second tuning elements 25. The plurality of different second tuning elements 25 are all connected to the second radiator 20. One end of the second switching switch 24 is grounded, and the other end is connected to the different second tuning elements 25 in a switchable manner, so as to adjust the electrical length of the second radiator 20. The second tuning element 25 may be a component like a capacitor, an inductor, or a resistor.

For example, there are four second tuning elements 25. The second switching switch 24 includes four single-pole single-throw switches 241, and the four single-pole single-throw switches 241 are connected in parallel. Specifically, one end of each of the four single-pole single-throw switches 241 is grounded, and the other end is connected to the second feeding component 21 through the different second tuning elements 25. By adjusting a status of the second switching switch 24, that is, by controlling the four single-pole single-throw switches 241 to be turned off or turned on, the electrical length of the second radiator 20 may be adjusted, so as to change a resonance frequency of the second radiator 20, so that the second radiator 20 can switch between different operating bands based on an actual requirement, and the antenna 620 can cover different operating bands.

In some other embodiments, there may be one, two, three, or more than five second tuning elements 25. In this case, the second switching switch 24 may correspondingly include one, two, three, or more than five single-pole single-throw switches. Alternatively, the second switching switch 24 may be a plurality of types of switching switches, for example, may include a physical switch like a single-pole multi-throw switch or a multi-pole multi-throw switch, or may be a switchable interface like a mobile industry processor interface (mobile industry processor interface, MIPI) or a general-purpose input/output interface (general-purpose input/output, GPIO).

In addition, the antenna 610 may further include a third ground component (not shown in the figure). One end of the third ground component is connected to the second radiator 20, and the other end is grounded. In this case, some of the second tuning elements 25 are connected to the second feeding component 21, and some of the second tuning elements 25 are connected to the third ground component. One end of the second switching switch 24 is grounded, and the other end is connected to the different second tuning elements 25 in a switchable manner, so as to adjust the electrical length of the second radiator 20.

In this embodiment, the antenna 610 further includes a first feed (FEED) 31, a first feeder 40, and a second feeder 50. The first feed 31 is electrically connected to the radio frequency front-end 620. In this embodiment, the first feed 31 is a full-band feed. To be specific, the first feed 31 is a feed covering three bands: a low band (low band, LB), a medium band (middle band, MB), and a high band (high band, HB). In other words, the radio frequency front-end 620 feeds the antenna 610 by sharing the feed. It should be understood that, in embodiments of this application, the low band means a frequency between 700 MHz and 1000 MHz, the medium band means a frequency between 1500 MHz and 2200 MHz, and the high band means a frequency between 2300 MHz and 2700 MHz.

The first feeder 40 is electrically connected between the first feed 31 and the first radiator 10. In other words, the first feed 31 is electrically connected to the first radiator 10 through the first feeder 40. The first feeder 40 is electrically connected to the first radiator 10 through the first feeding component 11. In this case, the first feed 31 is electrically connected to the first feed point 101 through the first feeder 40 and the first feeding component 11, so that the first feed 31 may feed a radio frequency signal into the first radiator 10 through the first feeder 40 and the first feeding component 11, and receive, through the first feeder 40 and the first feeding component 11, an external radio frequency signal received by the first radiator 10.

The second feeder 50 is electrically connected between the first feed 31 and the second radiator 20. In other words, the first feed 31 is electrically connected to the second radiator 20 through the second feeder 50. The second feeder 50 is electrically connected to the second radiator 20 through the second feeding component 21. In this case, the first feed 31 may feed a radio frequency signal into the second radiator 20 through the second feeder 50 and the second feeding component 21, and receive, through the second feeder 50 and the second feeding component 21, an external radio frequency signal received by the second radiator 20.

In addition, the antenna 610 further includes a switch 60. The switch 60 is disposed on the second feeder 50, and is connected between the first feed 31 and the second radiator 20. The switch 60 is electrically connected to the second radiator 20 through the second feeding component 21. In some other embodiments, the switch 60 may alternatively be disposed on the first feeder 40, and may be connected between the first feed 31 and the first radiator 10. Alternatively, the radio frequency front-end 620 includes two switches 60. One switch 60 is disposed on the first feeder 40, and is connected between the first feed 31 and the first radiator 10, and the other switch 60 is disposed on the second feeder 50, and is connected between the first feed 31 and the second radiator 20.

For example, the switch 60 includes a single-pole single-throw switch. The switch 60 includes a movable end part 60a and a non-movable end part 60b. An end that is of the movable end part 60a and that is away from the non-movable end part 60b is electrically connected to the first feed 31, and an end that is of the non-movable end part 60b and that is away from the movable end part 60a is electrically connected to the second feeding component 21. In some other embodiments, the end that is of the movable end part 60a and that is away from the movable end part 60b may alternatively be electrically connected to the second feeding component 21, and the end that is of the movable end part 60b and that is away from the movable end part 60a may alternatively be electrically connected to the first feed 31.

When the switch 60 is turned on, the movable end part 60a is connected to the non-movable end part 60b, and the antenna 610 is in a first operating mode. The first feed 31 feeds a radio frequency signal into the first radiator 10 and the second radiator 20. Specifically, the first feed 31 feeds a radio frequency signal into the first radiator 10 through the first feeder 40, and feeds a radio frequency signal into the second radiator 20 through the second feeder 50. In other words, the first feed 31 may simultaneously excite the first radiator 10 and the second radiator 20. In addition, the first feed 31 may further receive, through the first feeder 40, an external radio frequency signal received by the first radiator 10, and may further receive, through the second feeder 50, an external radio frequency signal received by the second radiator 20. In some other embodiments, the antenna 610 may alternatively not include the switch 60. In this case, the antenna 610 is always in the first operating mode. This can also decrease an SAR value of the antenna 610, and optimize a specific absorption rate characteristic of the antenna 610.

For example, a radio frequency signal of the radio frequency front-end 620 may be divided by a power divider (not shown in the figure) into two radio frequency signals with equal power. One radio frequency signal is fed into the first radiator 10 through the first feeder 40, and the other radio frequency signal is fed into the second radiator 20 through the second feeder 50. In some other embodiments, the radio frequency signal of the radio frequency front-end 620 may alternatively be divided by the power divider into two radio frequency signals with unequal power.

In this case, the first radiator 10 and the second radiator 20 receive radio frequency signals with a same phase (that is, a phase difference is 0), the first radiator 10 and the second radiator 20 are coupled to each other through the first slot 111 and the second slot 112, electrical lengths of the first radiator 10 and the second radiator 20 are the same, the first radiator 10 and the second radiator 20 work at a same frequency, and single resonance is generated. Currents near the first radiator 10 and the second radiator 20 are distributed evenly, and the first radiator 10 and the second radiator 20 may be more fully excited. This helps decrease an SAR value of the antenna 610, and improve antenna efficiency and beside head and hand (beside head and hand, BHH) performance of the antenna.

When the switch 60 is turned off, the movable end part 60a is not connected to the non-movable end part 60b, and the antenna 610 is in a second operating mode. The first feed 31 feeds a radio frequency signal into the first radiator 10. Specifically, the first feed 31 feeds a radio frequency signal into the first radiator 10 through the first feeder 40. In other words, the first feed 31 can excite only the first radiator 10, but cannot excite the second radiator 20. In addition, the first feed 31 may further receive, through the first feeder 40, an external radio frequency signal received by the first radiator 10.

In this case, the second radiator 20 is used as a parasitic radiator of the first radiator 10, and the first radiator 10 is coupled to and excites the second radiator 20 through the first slot 111 and the second slot 112. A current near the first radiator 10 is strong, and a current near the second radiator 20 is weak. In other words, the currents near the first radiator 10 and the second radiator 20 are distributed unevenly.

In the communication device 1000 shown in this embodiment, by controlling the switch 60 to be turned off or turned on, the first radiator 10 can be separately excited, or the first radiator 10 and the second radiator 20 can be simultaneously excited, so as to control switching between the first operating mode and the second operating mode of the antenna 610, and a current distribution status of the currents near the first radiator 10 and the second radiator 20 can be further changed. This helps improve antenna efficiency and beside head and hand performance of the antenna, and optimize a specific absorption characteristic of the antenna 610, thereby improving antenna performance of the communication device 1000, improving radio performance in an actual use scenario of a user, and improving use experience of the user.

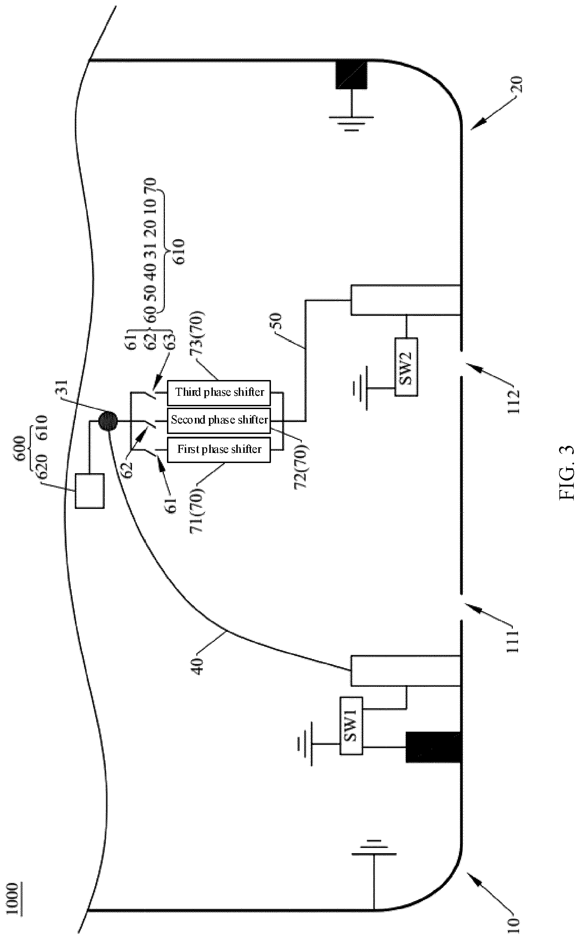

FIG. 3 is a second schematic diagram of a partial structure of a communication device 1000 according to an embodiment of this application.

A difference between the communication device 1000 in this embodiment and the communication device 1000 in the foregoing embodiment lies in that the antenna 610 further includes a plurality of phase shifters 70. The plurality of phase shifters 70 are disposed in parallel on the second feeder 50, and are connected between the switch 60 and the second radiator 20. Phase adjustment values of the plurality of phase shifters 70 are different. The switch 60 is connected to different phase shifters 70 in a switchable manner, to adjust a phase of the radio frequency signal fed by the first feed 31 into the second radiator 20.

For example, there are three phase shifters 70. For ease of understanding, the three phase shifters 70 are respectively named a first phase shifter 71, a second phase shifter 72, and a third phase shifter 73. Specifically, the first phase shifter 71, the second phase shifter 72, and the third phase shifter 73 are all disposed on the second feeder 50, and are disposed in parallel. The first phase shifter 71, the second phase shifter 72, and the third phase shifter 73 are all connected between the switch 60 and the second feeding component 21, and are configured to change the phase of the radio frequency signal fed by the first feed 31 into the second radiator 20. It may be understood that, in some other embodiments, there may be one, two, or more than four phase shifters 70. This is not specifically limited in this application.

A phase adjustment value of the first phase shifter 71 is 0°, a phase adjustment value of the second phase shifter 72 is 90°, and a phase adjustment value of the third phase shifter 73 is 180°. It should be noted that, in some other embodiments, the phase adjustment values of the first phase shifter 71, the second phase shifter 72, and the third phase shifter 73 may alternatively be other values. This is not specifically limited in this application.

In this embodiment, the switch 60 includes a first single-pole single-throw switch 61, a second single-pole single-throw switch 62, and a third single-pole single-throw switch 63. The first single-pole single-throw switch 61, the second single-pole single-throw switch 62, and the third single-pole single-throw switch 63 are all disposed on the second feeder 50, and are disposed in parallel. Specifically, movable end parts (not marked in the figure) of the first single-pole single-throw switch 61, the second single-pole single-throw switch 62, and the third single-pole single-throw switch 63 are all connected to the first feed 31. A non-movable end part (not marked in the figure) of the first single-pole single-throw switch 61 is connected to the first phase shifter 71, a non-movable end part (not marked in the figure) of the second single-pole single-throw switch 62 is connected to the second phase shifter 72, and a non-movable end part (not marked in the figure) of the third single-pole single-throw switch 63 is connected to the third phase shifter 73.

In some other embodiments, the non-movable end parts (not marked in the figure) of the first single-pole single-throw switch 61, the second single-pole single-throw switch 62, and the third single-pole single-throw switch 63 may all be connected to the first feed 31. In this case, the movable end part (not marked in the figure) of the first single-pole single-throw switch 61 may be connected to the first phase shifter 71, the movable end part (not marked in the figure) of the second single-pole single-throw switch 62 may be connected to the second phase shifter 72, and the movable end part (not marked in the figure) of the third single-pole single-throw switch 63 may be connected to the third phase shifter 73.

When the first single-pole single-throw switch 61 is turned on, and the second single-pole single-throw switch 62 and the third single-pole single-throw switch 63 are both turned off, the movable end part of the first single-pole single-throw switch 61 is connected to the non-movable end part, neither of the movable end parts of the second single-pole single-throw switch 62 and the third single-pole single-throw switch 63 are connected to the non-movable end parts, and the antenna 610 is in the first operating mode. The first feed 31 feeds a radio frequency signal into the first radiator 10 and the second radiator 20. Specifically, the first feed 31 feeds a radio frequency signal into the first radiator 10 through the first feeder 40, and feeds a radio frequency signal into the second radiator 20 through the second feeder 50. In addition, the first feed 31 may further receive, through the first feeder 40, an external radio frequency signal received by the first radiator 10, and may further receive, through the second feeder 50, an external radio frequency signal received by the second radiator 20.

In this case, the first phase shifter 71 is connected to the second feeder 50, and the first phase shifter 71 adjusts the phase of the radio frequency signal fed by the first feed 31 into the second radiator 20 by 0°. In other words, the first phase shifter 71 does not adjust a phase of a radio frequency signal fed by the first feed 31 into the second feed point 201. That is, phases of the radio frequency signals received by the first radiator 10 and the second radiator 20 are the same, and a phase difference is 0°. It may be understood that a status of the communication device 1000 in this case is the same as a status of the communication device 1000 obtained when the switch 60 is turned on in the foregoing embodiment. Details are not described herein again.

When the switch 60 is turned off, the first single-pole single-throw switch 61, the second single-pole single-throw switch 62, and the third single-pole single-throw switch 63 are all turned off, none of the movable end parts of the first single-pole single-throw switch 61, the second single-pole single-throw switch 62, and the third single-pole single-throw switch 63 are connected to the non-movable end parts, and the antenna 610 is in the second operating mode. In this case, the first feed 31 can feed the first radiator 10 through the first feeder 40, but cannot feed the second radiator 20 through the second feeder 50. It may be understood that a status of the communication device 1000 in this case is the same as a status of the communication device 1000 obtained when the switch 60 is turned off in the foregoing embodiment. Details are not described herein again.

When the second single-pole single-throw switch 62 is turned on, and the first single-pole single-throw switch 61 and the third single-pole single-throw switch 63 are both turned off, the movable end part of the second single-pole single-throw switch 62 is connected to the non-movable end part, neither of the movable end parts of the first single-pole single-throw switch 61 and the third single-pole single-throw switch 63 are connected to the non-movable end parts, and the antenna 610 is in a third operating mode. The first feed 31 feeds a radio frequency signal into the first radiator 10 and the second radiator 20. Specifically, the first feed 31 feeds a radio frequency signal into the first radiator 10 through the first feeder 40, and feeds a radio frequency signal into the second radiator 20 through the second feeder 50. In addition, the first feed 31 may further receive, through the first feeder 40, an external radio frequency signal received by the first radiator 10, and may further receive, through the second feeder 50, an external radio frequency signal received by the second radiator 20.

In this case, the second phase shifter 72 is connected to the second feeder 50, and the second phase shifter 72 adjusts the phase of the radio frequency signal fed by the first feed 31 into the second radiator 20 by 90°. That is, the first radiator 10 and the second radiator 20 receive radio frequency signals with different phases, and the phase difference is 90°. The first radiator 10 and the second radiator 20 are coupled to each other through the first slot 111 and the second slot 112, electrical lengths of the first radiator 10 and the second radiator 20 are different, the first radiator 10 and the second radiator 20 work at different frequencies, and double resonance is generated.

When the third single-pole single-throw switch 63 is turned on, and the first single-pole single-throw switch 61 and the second single-pole single-throw switch 62 are both turned off, the movable end part of the third single-pole single-throw switch 63 is connected to the non-movable end part, neither of the movable end parts of the first single-pole single-throw switch 61 and the second single-pole single-throw switch 62 are connected to the non-movable end parts, and the antenna 610 is in a fourth operating mode. The first feed 31 feeds a radio frequency signal into the first radiator 10 and the second radiator 20. Specifically, the first feed 31 feeds a radio frequency signal into the first radiator 10 through the first feeder 40, and feeds a radio frequency signal into the second radiator 20 through the second feeder 50. In addition, the first feed 31 may further receive, through the first feeder 40, an external radio frequency signal received by the first radiator 10, and may further receive, through the second feeder 50, an external radio frequency signal received by the second radiator 20.

In this case, the third phase shifter 73 is connected to the second feeder 50, and the third phase shifter 73 adjusts the phase of the radio frequency signal fed by the first feed 31 into the second radiator 20 by 180°. That is, the first radiator 10 and the second radiator 20 receive radio frequency signals with different phases, and the phase difference is 180°. The first radiator 10 and the second radiator 20 are coupled to each other through the first slot 111 and the second slot 112, electrical lengths of the first radiator 10 and the second radiator 20 are the same, the first radiator 10 and the second radiator 20 work at a same frequency, and single resonance is generated.

In some other embodiments, the switch 60 may alternatively include a single-pole multi-throw switch. In this case, the switch 60 includes a movable end part and three non-movable end parts. An end that is of the movable end part and that is far away from the non-movable end part is connected to the first feed 31, and ends that are of the three non-movable end parts and that are away from the movable end part are respectively connected to the first phase shifter 71, the second phase shifter 72, and the third phase shifter 73. When the movable end part is connected to different non-movable end parts in a switchable manner, the first phase shifter 71, the second phase shifter 72, or the third phase shifter 73 is connected to the second feeder 50, so as to adjust different phases of the radio frequency signal fed by the first feed 31 into the second feed point 201.

In the communication device 1000 shown in this embodiment, by controlling the first single-pole single-throw switch 61, the second single-pole single-throw switch 62, and the third single-pole single-throw switch 63 to be turned on and turned off, the first phase shifter 71, the second phase shifter 72, or the third phase shifter 73 can be connected to the second feeder 50, so that the first radiator 10 can be separately excited, or the first radiator 10 and the second radiator 20 can be simultaneously excited, and a phase difference between the radio frequency signals fed by the first feed 31 into the first radiator 10 and the second radiator 20 can be further adjusted, so as to control switching of an operating mode of the antenna 610. In addition, a current distribution status of the currents near the first radiator 10 and the second radiator 20 can be changed. This helps improve antenna efficiency and beside head and hand performance of the antenna, and optimize a specific absorption characteristic of the antenna 610, thereby improving antenna performance of the communication device 1000, improving radio performance in an actual use scenario of a user, and improving use experience of the user.

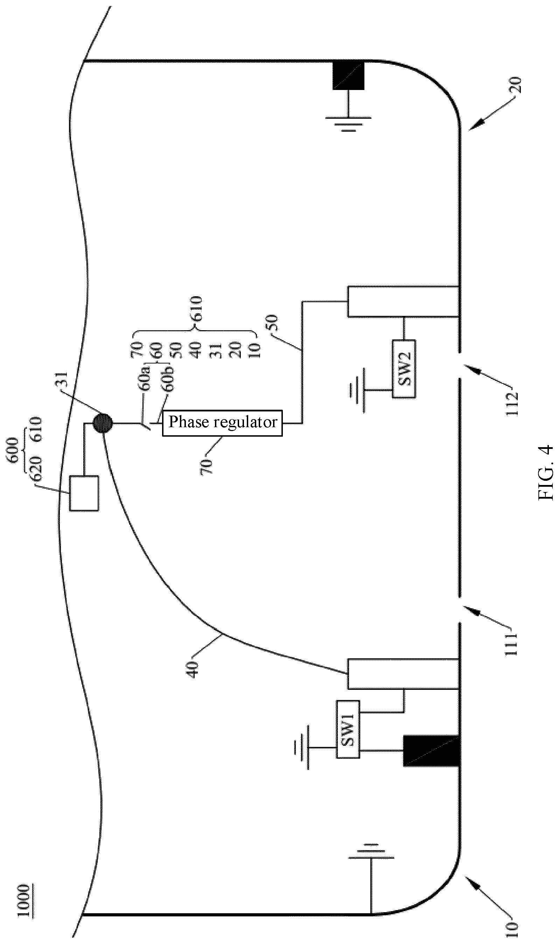

FIG. 4 is a third schematic diagram of a partial structure of a communication device 1000 according to an embodiment of this application.

A difference between the communication device 1000 in this embodiment and the communication device 1000 in the first embodiment lies in that the antenna 710 includes a phase regulator 70, and the phase regulator 70 is disposed on the second feeder 50. The phase regulator 70 is connected between the switch 60 and the second radiator 20, and is configured to change the phase of the radio frequency signal fed by the first feed 31 into the second feed point 201. One end of the phase regulator 70 is connected to the non-movable end part 60b of the switch 60, and the other end is connected to the second feeding component 21. For example, the phase regulator 70 has a plurality of phase adjustment values, for example, 0°, 90°, and 180°.

When the switch 60 is turned off, the movable end part 60a of the switch 60 is not connected to the non-movable end part 60b, and the antenna 610 is in the second operating mode. In this case, the first feed 31 can feed the first radiator 10 through the first feeder 40, but cannot feed the second radiator 20 through the second feeder 50. It may be understood that a status of the communication device 1000 in this case is the same as a status of the communication device 1000 obtained when the switch 60 is turned off in the foregoing embodiment. Details are not described herein again.

When the switch 60 is turned on, the movable end part 60a of the switch 60 is connected to the non-movable end part 60b, and the first feed 31 feeds a radio frequency signal into the first radiator 10 and the second radiator 20. Specifically, the first feed 31 feeds a radio frequency signal into the first radiator 10 through the first feeder 40, and feeds a radio frequency signal into the second radiator 20 through the second feeder 50.

In this case, the phase regulator 70 is connected to the second feeder 50, and the phase regulator 70 adjusts a phase of the radio frequency signal fed by the first feed 31 into the second radiator 20. It may be understood that, when the phase regulator 70 adjusts the phase of the radio frequency signal fed by the first feed 31 into the second radiator 20 by 0°, a status of the communication device 100 is the same as a status obtained when the first single-pole single-throw switch 61 is turned on (that is, when the antenna 610 is in the first operating mode) in the second embodiment. When the phase regulator 70 adjusts the phase of the radio frequency signal fed by the first feed 31 into the second radiator 20 by 90°, a status of the communication device 100 is the same as a status obtained when the second single-pole single-throw switch 62 is turned on (that is, when the antenna 610 is in the second operating mode) in the second embodiment. When the phase regulator 70 adjusts the phase of the radio frequency signal fed by the first feed 31 into the second radiator 20 by 180°, a status of the communication device 100 is the same as a status obtained when the third single-pole single-throw switch 63 is turned on (that is, when the antenna 610 is in the third operating mode) in the second embodiment. Details are not described herein again.

In the communication device 1000 shown in this embodiment, by controlling the switch 60 to be turned on and turned off, the phase regulator 70 can be connected to the second feeder 50, so that the first radiator 10 can be separately excited, or the first radiator 10 and the second radiator 20 can be simultaneously excited, and a phase difference between the radio frequency signals fed by the first feed 31 into the first radiator 10 and the second radiator 20 can be further adjusted, so as to control switching of an operating mode of the antenna 610. In addition, a current distribution status of the currents near the first radiator 10 and the second radiator 20 can be changed. This helps improve antenna efficiency and beside head and hand performance of the antenna, and optimize a specific absorption characteristic of the antenna 610, thereby improving antenna performance of the communication device 1000, improving radio performance in an actual use scenario of a user, and improving use experience of the user.

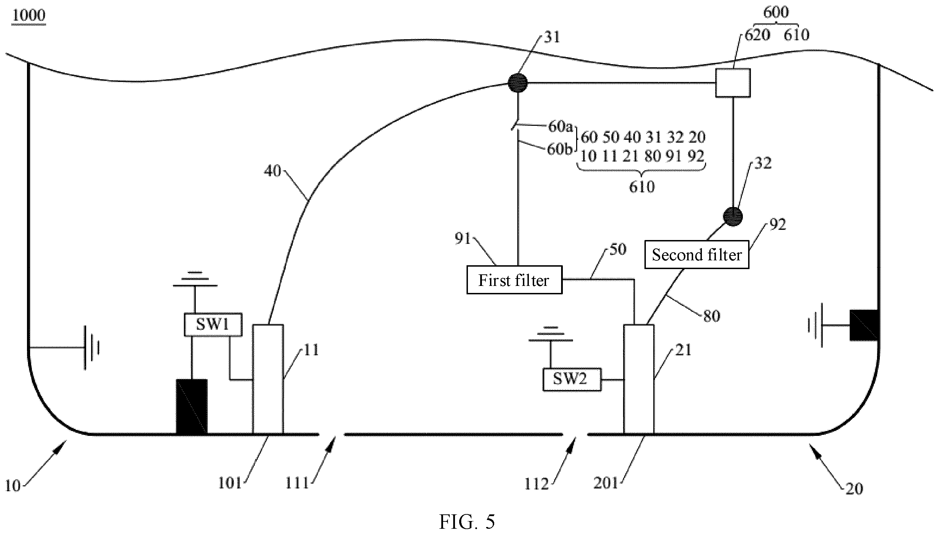

FIG. 5 is a fourth schematic diagram of a partial structure of a communication device 1000 according to an embodiment of this application.

A difference between the communication device 1000 in this embodiment and the communication device 1000 in the first embodiment lies in that the first feed 31 is a medium- and high-band feed (MHB FEED). To be specific, the first feed 31 is a feed covering two bands: a medium band and a high band. The antenna 610 further includes a second feed 32, a third feeder 80, a first filter 91, and a second filter 92. The second feed 32 is electrically connected to the radio frequency front-end 620. The second feed 32 is a low-band feed (LB FEED). To be specific, the second feed 32 is a feed covering a low band. In other words, the radio frequency front-end 620 feeds the antenna 610 in a manner in which a low-band signal and a medium- and high-band signal are separately fed. In some other embodiments, the first feed 31 may alternatively be a low-band feed, and the second feed 32 may alternatively be a medium- and high-band feed.

In this embodiment, the first feed 31 is electrically connected to the first radiator 10 through the first feeder 40, so that the first feed 31 may feed a medium- and high-band radio frequency signal into the first radiator 10 through the first feeder 40, and receive, through the first feeder 40, an external medium- and high-band radio frequency signal received by the first radiator 10. The first feed 31 is electrically connected to the second radiator 20 through the second feeder 50, so that the first feed 31 may feed a medium- and high-band radio frequency signal into the second radiator 20 through the second feeder 50, and receive, through the second feeder 50, an external medium- and high-band radio frequency signal received by the second radiator 20.

The third feeder 80 is electrically connected between the second feed 32 and the second radiator 20. In other words, the second feed 32 is electrically connected to the second radiator 20 through the third feed 80. The third feeder 80 is electrically connected to the second radiator 20 through the second feeding component 21. In this case, the second feed 32 may feed a low-band radio frequency signal into the second radiator 20 through the third feeder 80 and the second feeding component 21, and receive, through the third feeder 80 and the second feeding component 21, an external low-band radio frequency signal received by the second radiator 20.

It should be noted that, in some other embodiments, the third feeder 80 may alternatively be electrically connected between the second feed 32 and the first radiator 10. In other words, the second feed 32 is electrically connected to the first radiator 10 through the third feeder 80. The third feeder 80 is electrically connected to the first radiator 10 through the first feeding component 11. In this case, the second feed 32 may feed a low-band radio frequency signal into the first radiator 10 through the third feeder 80 and the first feeding component 11, and receive, through the third feeder 80 and the first feeding component 11, an external low-band radio frequency signal received by the first radiator 10.

The second filter 92 is disposed on the third feeder 80, and is connected between the second feed 32 and the second radiator 20, to filter out a medium- and high-band radio frequency signal flowing between the second feed 32 and the second radiator 20. In other words, the second filter 92 is configured to: allow the low-band radio frequency signal to pass, and prevent the medium- and high-band radio frequency signal from passing.

In this embodiment, the second feed 32 separately excites the second radiator 20. The second feed 32 may feed the second radiator 20 through the third feeder 80. Specifically, the second feed 32 may feed the low-band radio frequency signal into the second radiator 20 through the third feeder 80, and may further receive, through the third feeder 80, the external low-band radio frequency signal received by the second radiator 20. The second filter 92 may filter out the external medium- and high-band radio frequency signal received by the second radiator 20. In this case, the first radiator 10 may be used as a parasitic radiator of the second radiator 20, and the second radiator 20 may also be coupled to and excite the first radiator 10 through the first slot 111 and the second slot 112.

The first filter 91 is disposed on the second feeder 50, and is connected between the first feed 31 and the second radiator 20, to filter out a low-band radio frequency signal flowing between the first feed 31 and the second feed point 201 of the second radiator 20. In other words, the first filter 91 is configured to: allow the medium- and high-band radio frequency signal to pass, and prevent the low-band radio frequency signal from passing. Specifically, the first filter 91 is connected between the switch 60 and the second radiator 20.

In this embodiment, the switch 60 includes a single-pole single-throw switch. The switch 60 includes a movable end part 60a and a non-movable end part 60b. An end that is of the movable end part 60a and that is away from the non-movable end part 60b is electrically connected to the first feed 31, and an end that is of the non-movable end part 60b and that is away from the movable end part 60a is electrically connected to the first filter 91. In some other embodiments, the end that is of the movable end part 60a and that is away from the movable end part 60b may alternatively be electrically connected to the first filter 91, and the end that is of the movable end part 60b and that is away from the movable end part 60a may alternatively be electrically connected to the first feed 31.

When the switch 60 is turned on, the movable end part 60a of the switch 60 is connected to the non-movable end part 60b, and the antenna 610 is in a first operating mode. The first feed 31 feeds a medium- and high-band radio frequency signal into the first radiator 10 and the second radiator 20. Specifically, the first feed 31 feeds a medium- and high-band radio frequency signal into the first radiator 10 through the first feeder 40, and feeds a medium- and high-band radio frequency signal into the second radiator 20 through the second feeder 50. In other words, the first feed 31 may simultaneously excite the first radiator 10 and the second radiator 20. In addition, the first feed 31 may further receive, through the first feeder 40, an external medium- and high-band radio frequency signal received by the first radiator 10, and may further receive, through the second feeder 50, an external medium- and high-band radio frequency signal received by the second radiator 20. In this case, the first filter 91 is connected to the second feeder 50, and may filter out an external low-band radio frequency signal received by the second radiator 20.

For example, a medium- and high-band radio frequency signal of the radio frequency front-end 620 may be divided by a power divider (not shown in the figure) into two medium- and high-band radio frequency signals with equal power. One medium- and high-band radio frequency signal is fed into the first radiator 10 through the first feeder 40, and the other medium- and high-band radio frequency signal is transmitted to the second radiator 20 through the second feeder 50. In some other embodiments, the medium- and high-band radio frequency signal of the radio frequency front-end 620 may alternatively be divided by the power divider into two medium- and high-band radio frequency signals with unequal power.

In this case, phases of medium- and high-band radio frequency signals received by the first radiator 10 and the second radiator 20 are the same (that is, a phase difference is 0), the first radiator 10 and the second radiator 20 may be coupled to each other through the first slot 111 and the second slot 112, electrical lengths of the first radiator 10 and the second radiator 20 are the same, the first radiator 10 and the second radiator 20 work at a same frequency, and single resonance is generated. Currents near the first radiator 10 and the second radiator 20 are distributed evenly, and the first radiator 10 and the second radiator 20 may be more fully excited. This helps decrease an SAR value of the antenna 610, and improve antenna efficiency and beside head and hand performance of the antenna.

It should be noted that the medium- and high-band radio frequency signal has great impact on the SAR value of the antenna 610. In this embodiment, the antenna 610 is fed in a manner in which a low-band signal and a medium- and high-band signal are separately fed. This is more conducive to adjustment of the medium- and high-band radio frequency signal, and is conducive to optimization of a specific absorption rate characteristic of the antenna 610.

When the switch 60 is turned off, the movable end part 60a of the switch 60 is not connected to the non-movable end part 60b, and the antenna 610 is in the second operating mode. The first feed 31 feeds a medium- and high-band radio frequency signal into the first radiator 10. Specifically, the first feed 31 feeds a medium- and high-band radio frequency signal into the first radiator 10 through the first feeder 40. In other words, the first feed 31 can excite only the first radiator 10, but cannot excite the second radiator 20. In addition, the first feed 31 may further receive, through the first feeder 40, an external medium- and high-band radio frequency signal received by the first radiator 10.

In this case, the second radiator 20 is used as a parasitic radiator of the first radiator 10, and the first radiator 10 is coupled to and excites the second radiator 20 through the first slot 111 and the second slot 112. A current near the first radiator 10 is strong, and a current near the second radiator 20 is weak. In other words, the currents near the first radiator 10 and the second radiator 20 are distributed unevenly.

In the communication device 1000 in this embodiment, by controlling the switch 60 to be turned off or turned on, the first feed 31 can separately excite the first radiator 10, or simultaneously excite the first radiator 10 and the second radiator 20, to control switching of an operating mode of the antenna 610. In addition, a current distribution status of the currents near the first radiator 10 and the second radiator 20 can be changed. This helps improve antenna efficiency and beside head and hand performance of the antenna, and optimize a specific absorption characteristic of the antenna 610, thereby improving antenna performance of the communication device 1000, improving radio performance in an actual use scenario of a user, and improving use experience of the user.

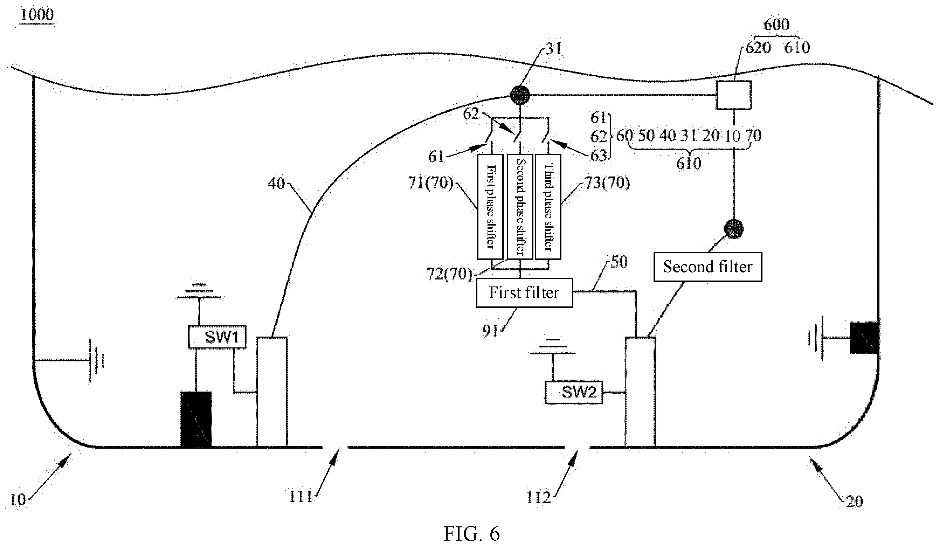

FIG. 6 is a fifth schematic diagram of a partial structure of a communication device 1000 according to an embodiment of this application.

A difference between the communication device 1000 in this embodiment and the communication device 1000 in the fourth embodiment lies in that the antenna 610 further includes a plurality of phase shifters 70. The plurality of phase shifters 70 are disposed in parallel on the second feeder 50, and are connected between the switch 60 and the second radiator 20. Phase adjustment values of the plurality of phase shifters 70 are different. The switch 60 is connected to different phase shifters 70 in a switchable manner, to adjust a phase of the radio frequency signal fed by the first feed 31 into the second radiator 20.

For example, there are three phase shifters 70. For ease of understanding, the three phase shifters 70 are respectively named a first phase shifter 71, a second phase shifter 72, and a third phase shifter 73. Specifically, the first phase shifter 71, the second phase shifter 72, and the third phase shifter 73 are all disposed on the second feeder 50, and are disposed in parallel. The first phase shifter 71, the second phase shifter 72, and the third phase shifter 73 are all connected between the switch 60 and the second feeding component 21, and are configured to change the phase of the radio frequency signal fed by the first feed 31 into the second radiator 20. It may be understood that, in some other embodiments, there may be one, two, or more than four phase shifters 70. This is not specifically limited in this application.

A phase adjustment value of the first phase shifter 71 is 0°, a phase adjustment value of the second phase shifter 72 is 90°, and a phase adjustment value of the third phase shifter 73 is 180°. It should be noted that, in some other embodiments, the phase adjustment values of the first phase shifter 71, the second phase shifter 72, and the third phase shifter 73 may alternatively be other values. This is not specifically limited in this application.

In this embodiment, the switch 60 includes a first single-pole single-throw switch 61, a second single-pole single-throw switch 62, and a third single-pole single-throw switch 63. The first single-pole single-throw switch 61, the second single-pole single-throw switch 62, and the third single-pole single-throw switch 63 are all disposed on the second feeder 50, and are disposed in parallel. Specifically, movable end parts (not marked in the figure) of the first single-pole single-throw switch 61, the second single-pole single-throw switch 62, and the third single-pole single-throw switch 63 are all connected to the first feed 31. A non-movable end part (not marked in the figure) of the first single-pole single-throw switch 61 is connected to the first phase shifter 71, a non-movable end part (not marked in the figure) of the second single-pole single-throw switch 62 is connected to the second phase shifter 72, and a non-movable end part (not marked in the figure) of the third single-pole single-throw switch 63 is connected to the third phase shifter 73.

In some other embodiments, the non-movable end parts (not marked in the figure) of the first single-pole single-throw switch 61, the second single-pole single-throw switch 62, and the third single-pole single-throw switch 63 may all be connected to the first feed 31. In this case, the movable end part (not marked in the figure) of the first single-pole single-throw switch 61 may be connected to the first phase shifter 71, the movable end part (not marked in the figure) of the second single-pole single-throw switch 62 may be connected to the second phase shifter 72, and the movable end part (not marked in the figure) of the third single-pole single-throw switch 63 may be connected to the third phase shifter 73.

When the switch 60 is turned off, the first single-pole single-throw switch 61, the second single-pole single-throw switch 62, and the third single-pole single-throw switch 63 are all turned off, none of the movable end parts of the first single-pole single-throw switch 61, the second single-pole single-throw switch 62, and the third single-pole single-throw switch 63 are connected to the non-movable end parts, and the antenna 610 is in the second operating mode. The first feed 31 feeds a radio frequency signal into the first radiator 10. Specifically, the first feed 31 feeds a radio frequency signal into the first radiator 10 through the first feeder 40. In other words, the first feed 31 can excite only the first radiator 10, but cannot excite the second radiator 20. In addition, the first feed 31 may further receive, through the first feeder 40, an external radio frequency signal received by the first radiator 10.

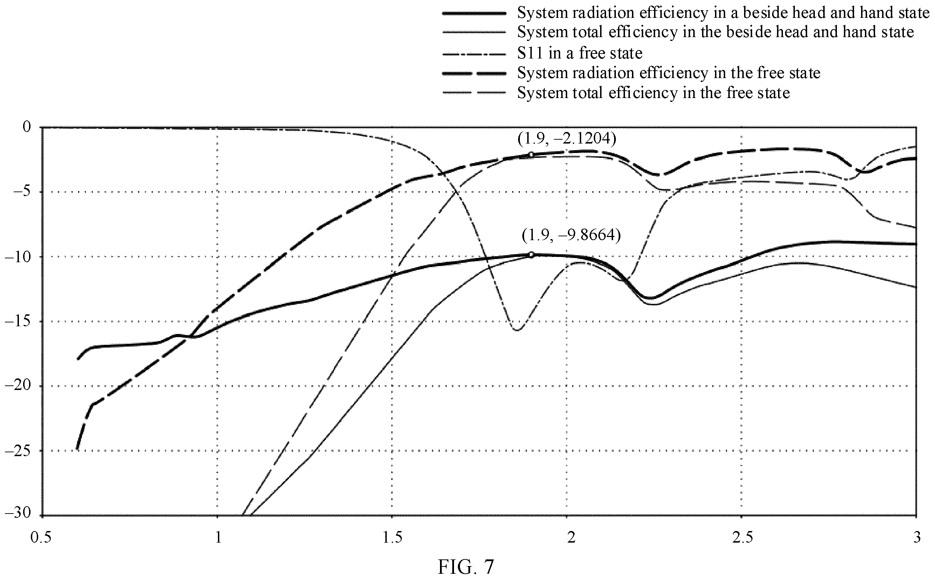

FIG. 7 is a diagram of a return loss coefficient (S11) curve of the antenna 610 in a free state and efficiency curves of the antenna 610 in different states obtained when the switch 60 in the communication device 1000 shown in FIG. 6 is turned off. The S11 curve diagram is obtained by performing a simulation test when the first feed 31 performs feeding but the second feed 32 does not perform feeding.

In the curve diagram shown in FIG. 7, a horizontal coordinate is a frequency (unit: GHz), and a vertical coordinate is a return loss coefficient and efficiency (unit: dB). It can be seen from FIG. 7 that, in a free state (free space, FS), the antenna 610 generates double resonance, that is, the antenna 610 has two resonance modes. Resonance frequencies are respectively around 1.9 GHz and 2.2 GHz. When the communication device 1000 is in the free state, radiation efficiency of the antenna 610 is -2.1204 dB at a frequency of 1.9 GHz. When the communication device 1000 is in a beside head and hand state (a user holds the communication device 1000 with a hand and places the communication device 1000 beside a head), radiation efficiency of the antenna 610 is -9.8664 dB at a frequency of 1.9 GHz. In other words, compared with the free state, the radiation efficiency of the antenna 610 decreases by 7.746 dB in the beside head and hand state.

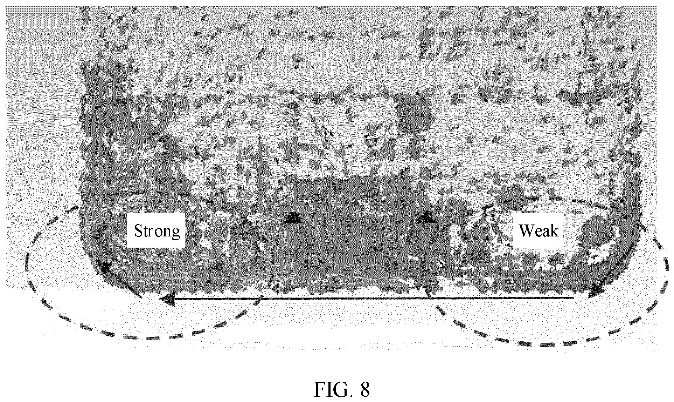

FIG. 8 is a schematic diagram of current distribution obtained when the switch 60 in the communication device 1000 shown in FIG. 6 is turned off.

FIG. 8 is a diagram of current distribution at a frequency of 1.9 GHz. A current at a position with dense arrows is strong, and a current at a position with sparse arrows is weak. It can be learned from FIG. 8 that the current flows roughly along a direction from the second radiator 20 to the first radiator 10. The second radiator 20 is used as a parasitic radiator of the first radiator 10, and the first radiator 10 is coupled to and excites the second radiator 20 through the first slot 111 and the second slot 112. A current near the first radiator 10 is strong, and a current near the second radiator 20 is weak. In other words, the currents near the first radiator 10 and the second radiator 20 are distributed very unevenly.

When the first single-pole single-throw switch 61 is turned on, and the second single-pole single-throw switch 62 and the third single-pole single-throw switch 63 are both turned off, the movable end part of the first single-pole single-throw switch 61 is connected to the non-movable end part, neither of the movable end parts of the second single-pole single-throw switch 62 and the third single-pole single-throw switch 63 are connected to the non-movable end parts, and the antenna 610 is in the first operating mode. The first feed 31 feeds a medium- and high-band radio frequency signal into the first radiator 10 and the second radiator 20. Specifically, the first feed 31 feeds a medium- and high-band radio frequency signal into the first radiator 10 through the first feeder 40, and feeds a medium- and high-band radio frequency signal into the second radiator 20 through the second feeder 50. In addition, the first feed 31 may further receive, through the first feeder 40, an external medium- and high-band radio frequency signal received by the first radiator 10, and may further receive, through the second feeder 50, an external medium- and high-band radio frequency signal received by the second radiator 20.

In this case, the first phase shifter 71 is connected to the second feeder 50, and the first phase shifter 71 adjusts the phase of the medium- and high-band radio frequency signal fed by the first feed 31 into the second radiator 20 by 0°. In other words, the first phase shifter 71 does not adjust a phase of a medium- and high-band radio frequency signal fed by the first feed 31 into the second feed point 201. That is, phases of the medium- and high-band radio frequency signals received by the first radiator 10 and the second radiator 20 are the same, and a phase difference is 0°.

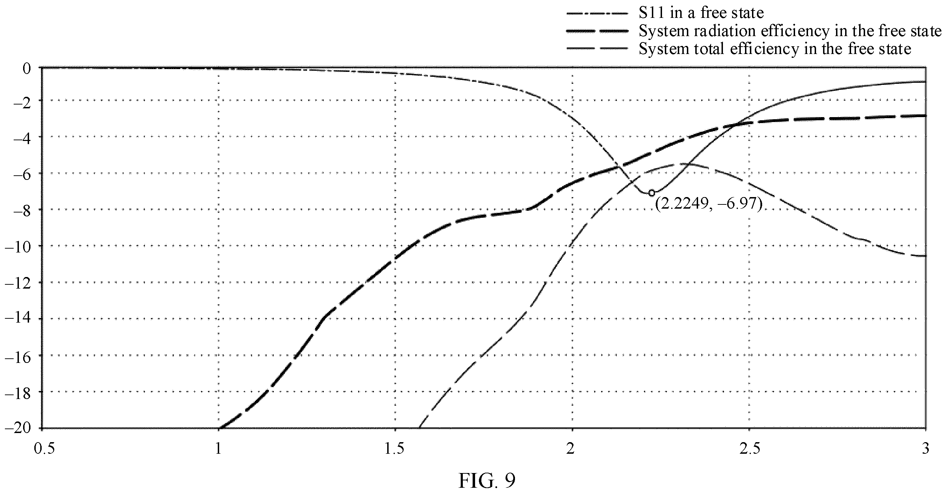

FIG. 9 is a diagram of a return loss coefficient (S11) curve and an efficiency curve of the antenna 610 in a free state obtained when the first single-pole single-throw switch 61 in the communication device 1000 shown in FIG. 6 is turned on. The S11 curve diagram is obtained by performing a simulation test when the first feed 31 performs feeding but the second feed 32 does not perform feeding.

In the curve diagram shown in FIG. 9, a horizontal coordinate is a frequency (unit: GHz), and a vertical coordinate is efficiency and a return loss coefficient (unit: dB). It can be learned from FIG. 9 that, when the first single-pole single-throw switch 61 is turned on, the electrical lengths of the first radiator 10 and the second radiator 20 are the same, the first radiator 10 and the second radiator 20 work at a same frequency, the antenna 610 generates single resonance, and a resonance frequency is around 2.2 GHz. In this case, the antenna 610 forms a slot differential mode (slot differential mode, slot DM). At a frequency of 2.2249 GHz, a return loss coefficient of the antenna 610 is -6.97 dB, and radiation efficiency of the antenna 610 is greater than -6 dB.

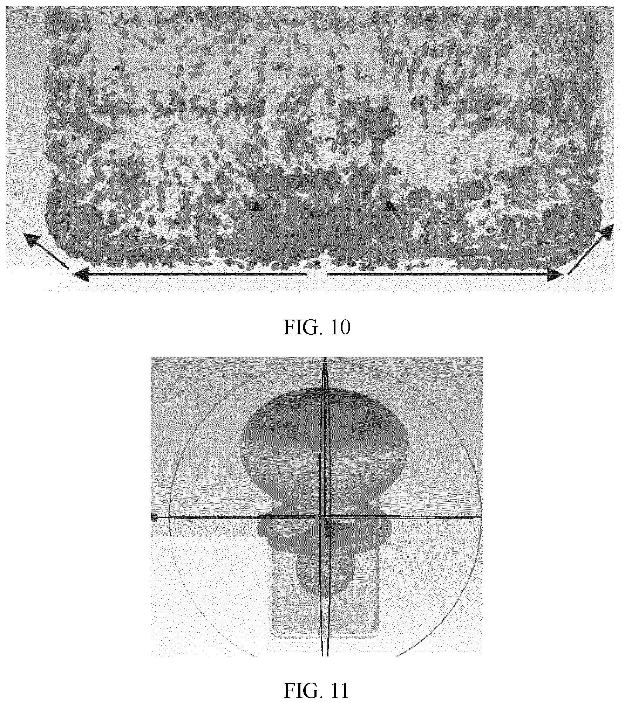

FIG. 10 is a diagram of current distribution at 2.2 GHz obtained when the first single-pole single-throw switch 61 in the communication device 1000 shown in FIG. 6 is turned on.

As shown in FIG. 10, a current at a position with dense arrows is strong, and a current at a position with sparse arrows is weak. It can be seen from FIG. 10 that the current flows roughly along a direction in which the first radiator 10 and the second radiator 20 are close to each other and then away from each other, and the antenna 610 forms a slot differential mode. Currents near the first radiator 10 and the second radiator 20 are both strong, that is, the currents near the first radiator 10 and the second radiator 20 are distributed evenly. A maximum current density is 235.515 A/m.

FIG. 11 is a radiation pattern of the antenna 610 at 2.2 GHz obtained when the first single-pole single-throw switch 61 in the communication device 1000 shown in FIG. 6 is turned on.

A region with a deeper grayscale shown in FIG. 11 represents stronger radiation. A white region indicates weak radiation. It can be seen from FIG. 11 that, when the first single-pole single-throw switch 61 is turned on, the antenna 610 forms a slot differential mode.

When the second single-pole single-throw switch 62 is turned on, and the first single-pole single-throw switch 61 and the third single-pole single-throw switch 63 are both turned off, the movable end part of the second single-pole single-throw switch 62 is connected to the non-movable end part, neither of the movable end parts of the first single-pole single-throw switch 61 and the third single-pole single-throw switch 63 are connected to the non-movable end parts, and the antenna 610 is in a third operating mode. The first feed 31 feeds a medium- and high-band radio frequency signal into the first radiator 10 and the second radiator 20. Specifically, the first feed 31 feeds a medium- and high-band radio frequency signal into the first radiator 10 through the first feeder 40, and feeds a medium- and high-band radio frequency signal into the second radiator 20 through the second feeder 50. In addition, the first feed 31 may further receive, through the first feeder 40, an external medium- and high-band radio frequency signal received by the first radiator 10, and may further receive, through the second feeder 50, an external medium- and high-band radio frequency signal received by the second radiator 20.

In this case, the second phase shifter 72 is connected to the second feeder 50, and the second phase shifter 72 adjusts the phase of the medium- and high-band radio frequency signal fed by the first feed 31 into the second radiator 20 by 90°. That is, the first radiator 10 and the second radiator 20 receive medium- and high-band radio frequency signals with different phases, and the phase difference is 90°.

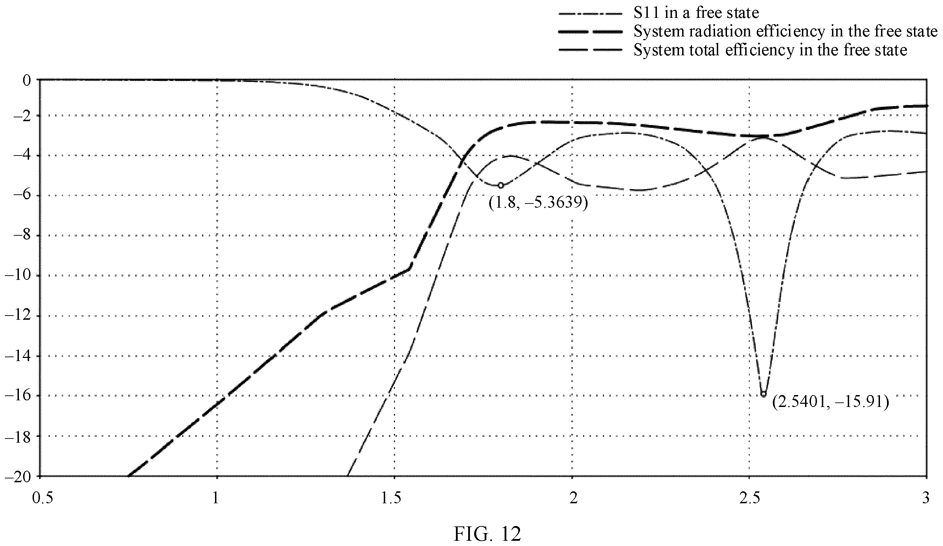

FIG. 12 is a diagram of a return loss coefficient (S11) curve and an efficiency curve of the antenna 610 in a free state obtained when the second single-pole single-throw switch 62 in the communication device 1000 shown in FIG. 6 is turned on. The S11 curve diagram is obtained by performing a simulation test when the first feed 31 performs feeding but the second feed 32 does not perform feeding.

In FIG. 12, a horizontal coordinate is a frequency (unit: GHz), and a vertical coordinate is a return loss coefficient and efficiency (unit: dB). It can be learned from FIG. 12 that, when the second single-pole single-throw switch 62 is turned on, the first radiator 10 and the second radiator 20 are coupled to each other through the first slot 111 and the second slot 112, electrical lengths of the first radiator 10 and the second radiator 20 are different, the first radiator 10 and the second radiator 20 work at different frequencies, the first radiator 10 and the second radiator 20 generate double resonance, and resonance frequencies are around 1.8 GHz and 2.55 GHz. In this case, the antenna 610 forms a slot common mode (slot common mode, slot CM) and a slot differential mode (slot differential mode, slot DM). At a frequency of 1.8 GHz, the antenna 610 forms the slot common mode, and the return loss coefficient of the antenna 610 is -6.97 dB. At a frequency of 2.5401 GHz, the antenna 610 forms the slot differential mode, and the return loss coefficient of the antenna 610 is -16.91 dB. In addition, radiation efficiency of the antenna 610 in the slot common mode is higher than radiation efficiency of the antenna 610 in the slot differential mode.

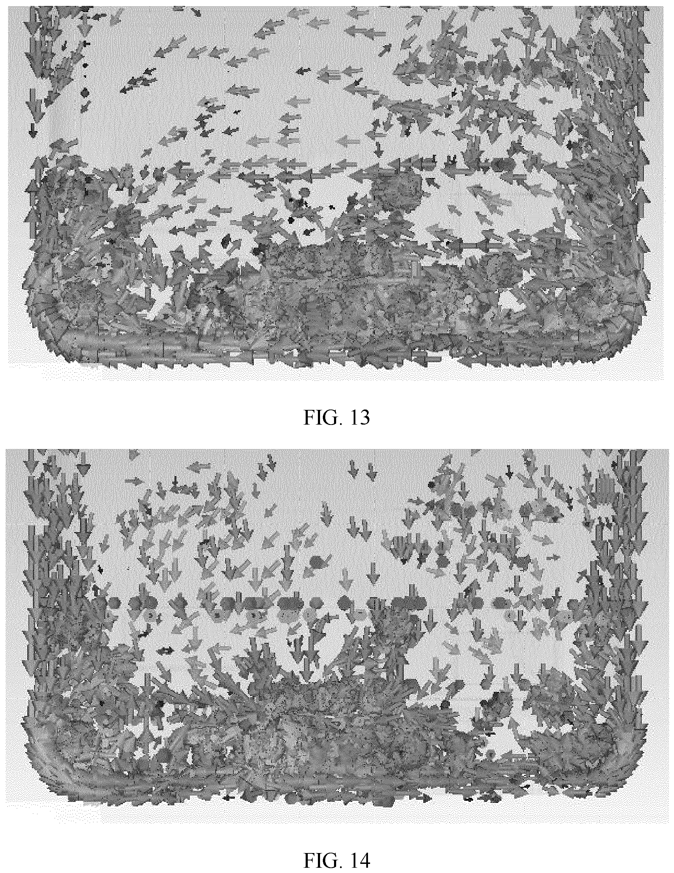

FIG. 13 is a diagram of current distribution at 1.8 GHz obtained when the second single-pole single-throw switch 62 in the communication device 1000 shown in FIG. 6 is turned on, and FIG. 14 is a diagram of current distribution at 2.55 GHz obtained when the second single-pole single-throw switch 62 in the communication device 1000 shown in FIG. 6 is turned on.

As shown in FIG. 13, a current at a position with dense arrows is strong, and a current at a position with sparse arrows is weak. It can be learned from FIG. 13 that the current flows roughly along a direction from the second radiator 20 to the first radiator 10. Currents near the first radiator 10 and the second radiator 20 are both strong, that is, the currents near the first radiator 10 and the second radiator 20 are distributed evenly. In this case, the antenna 610 forms a slot common mode.

As shown in FIG. 14, a current at a position with dense arrows is strong, and a current at a position with sparse arrows is weak. It can be seen from FIG. 14 that the current flows roughly along a direction in which the first radiator 10 and the second radiator 20 are away from each other and then close to each other. Currents near the first radiator 10 and the second radiator 20 are both strong, that is, the currents near the first radiator 10 and the second radiator 20 are distributed evenly. In this case, the antenna 610 forms a slot differential mode.

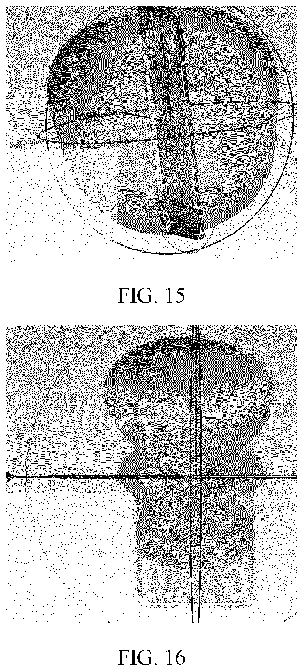

FIG. 15 is a radiation pattern of the antenna 610 at 1.8 GHz obtained when the second single-pole single-throw switch 62 in the communication device 1000 shown in FIG. 6 is turned on, and FIG. 16 is a radiation pattern of the antenna 610 at 2.55 GHz obtained when the second single-pole single-throw switch 62 in the communication device 1000 shown in FIG. 6 is turned on.

A region with a deeper grayscale shown in FIG. 15 represents stronger radiation. A white region indicates weak radiation. It can be seen from FIG. 15 that, when the second single-pole single-throw switch 62 is turned on, the antenna 610 forms a slot common mode at 1.8 GHz.

A region with a deeper grayscale shown in FIG. 16 represents stronger radiation. A white region indicates weak radiation. It can be seen from FIG. 16 that, when the second single-pole single-throw switch 62 is turned on, the antenna 610 forms a slot differential mode at 2.55 GHz.

When the third single-pole single-throw switch 63 is turned on, and the first single-pole single-throw switch 61 and the second single-pole single-throw switch 62 are both turned off, the movable end part of the third single-pole single-throw switch 63 is connected to the non-movable end part, neither of the movable end parts of the first single-pole single-throw switch 61 and the second single-pole single-throw switch 62 are connected to the non-movable end parts, and the antenna 610 is in a fourth operating mode. The first feed 31 feeds a radio frequency signal into the first radiator 10 and the second radiator 20. Specifically, the first feed 31 feeds a radio frequency signal into the first radiator 10 through the first feeder 40, and feeds a radio frequency signal into the second radiator 20 through the second feeder 50. In addition, the first feed 31 may further receive, through the first feeder 40, an external medium- and high-band radio frequency signal received by the first radiator 10, and may further receive, through the second feeder 50, an external medium- and high-band radio frequency signal received by the second radiator 20.

In this case, the third phase shifter 73 is connected to the second feeder 50, and the third phase shifter 73 adjusts the phase of the radio frequency signal fed by the first feed 31 into the second radiator 20 by 180°. That is, the first radiator 10 and the second radiator 20 receive radio frequency signals with different phases, and the phase difference is 180°.

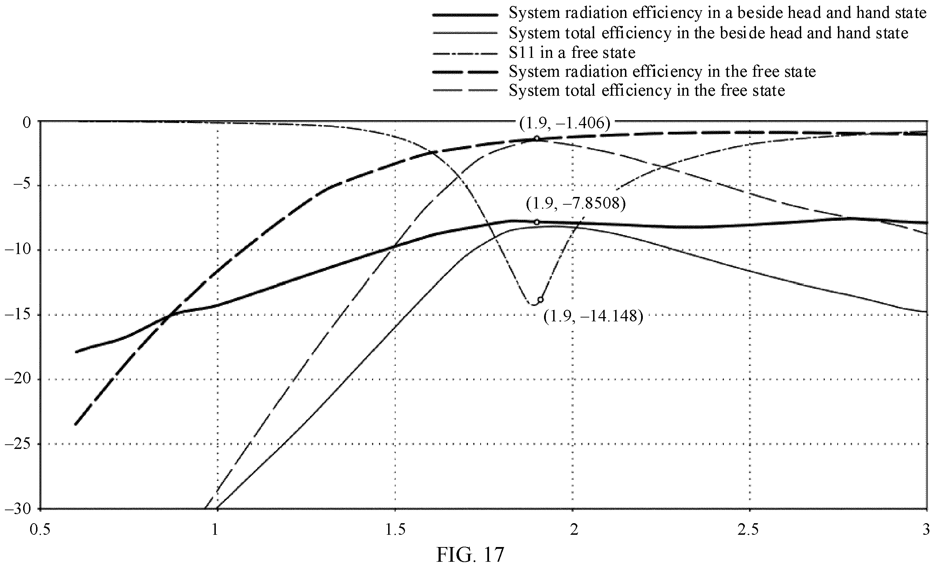

FIG. 17 is a diagram of a return loss coefficient (S11) curve of the antenna 610 in a free state and efficiency curves of the antenna 610 in different states obtained when the third single-pole single-throw switch 63 in the communication device 1000 shown in FIG. 6 is turned on. The S11 curve diagram is obtained by performing a simulation test when the first feed 31 performs feeding but the second feed 32 does not perform feeding.

In FIG. 17, a horizontal coordinate is a frequency (unit: GHz), and a vertical coordinate is a return loss coefficient and efficiency (unit: dB). It can be learned from FIG. 17 that, in the free state, when the third single-pole single-throw switch 63 is turned on, the first radiator 10 and the second radiator 20 are coupled to each other through the first slot 111 and the second slot 112, electrical lengths of the first radiator 10 and the second radiator 20 are the same, the first radiator 10 and the second radiator 20 work at a same frequency, the antenna 610 generates single resonance, a resonance frequency is around 1.9 GHz, and the antenna 610 forms a slot differential mode. At a frequency of 1.9 GHz, a return loss coefficient of antenna 610 is -14.148 dB.

When the communication device 1000 is in the free state, radiation efficiency of the antenna 610 is -1.406 dB at a frequency of 1.9 GHz. Compared with when the switch 60 is turned off, radiation efficiency of the antenna 610 is improved by 0.7 dB when the third single-pole single-throw switch 63 is turned on.

When the communication device 1000 is in a beside head and hand state, radiation efficiency of the antenna 610 is -7.8508 dB at a frequency of 1.9 GHz. Compared with when the communication device 1000 is in the beside head and hand state, radiation efficiency of the antenna 610 is decreased by 6.452 dB when the communication device 1000 is in the beside head and hand state. Compared with when the switch 60 is turned off, radiation efficiency of the antenna 610 is improved by about 2 dB when the third single-pole single-throw switch 63 is turned on.

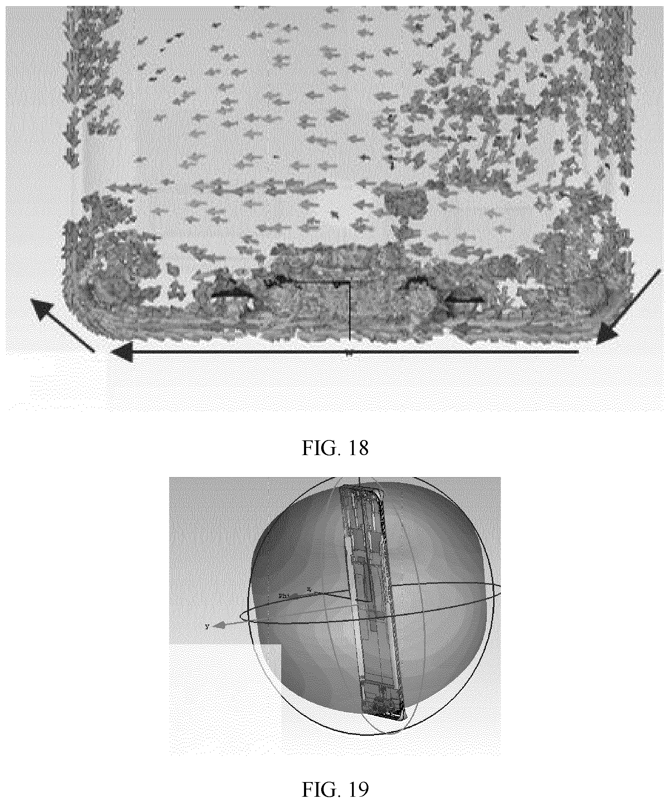

FIG. 18 is a diagram of current distribution at 1.9 GHz obtained when the third single-pole single-throw switch 63 in the communication device 1000 shown in FIG. 6 is turned on.

As shown in FIG. 18, a current at a position with dense arrows is strong, and a current at a position with sparse arrows is weak. It can be learned from FIG. 18 that the current flows roughly along a direction from the second radiator 20 to the first radiator 10, and the antenna 610 forms a slot common mode. Currents near the first radiator 10 and the second radiator 20 are both strong, that is, the currents near the first radiator 10 and the second radiator 20 are distributed evenly, and the first radiator 10 and the second radiator 20 can be fully excited.

FIG. 19 is a radiation pattern of the antenna 610 at 1.9 GHz obtained when the third single-pole single-throw switch 63 in the communication device 1000 shown in FIG. 6 is turned on.

A region with a deeper grayscale shown in FIG. 19 represents stronger radiation. A white region indicates weak radiation. It can be seen from FIG. 19 that, when the third single-pole single-throw switch 63 is turned on, the antenna 610 forms a slot common mode at 1.9GHz.

Table 1 is a comparison table of SARs (bottom body SAR) of bottom bodies, with 5 mm and 0 mm, of the communication device 1000 at a same frequency obtained when the antenna 610 shown in FIG. 6 is in two states. It should be understood that the bottom body of the communication device 1000 is an outer surface of the bottom frame 110d in the frame 110, that is, a surface that is of the lower surface 110d and that is away from the top frame 110c (see FIG. 1).

In Table 1, in an experiment group 1, the switch 60 is in an open state, and in an experiment group 2, the third single-pole single-throw switch 63 is in a closed state. Data shown in Table 1 is data obtained after efficiency in the free state is normalized on the premise that input power is 24 dBm and the normalized efficiency is -4. It can be learned from Table 1 that, compared with when the switch 60 is turned off, an SAR value at the bottom of the communication device 1000 is significantly decreased when the third single-pole single-throw switch 63 is turned on. It can be learned that, when the third single-pole single-throw switch 63 is turned on, it is more conducive to optimization the SAR characteristic of the antenna 610.

**Table 1 Comparison of SAR values of the antenna in different states at the bottom of the communication device**

| | Frequency | Experiment group 1 | Experiment group 2 |
|---|---|---|---|
| 5 mm | 1.9 GHz | 1.27 w/kg | 1.07 w/kg |
| | 1.95 GHz | 1.35 w/kg | 1.14 w/kg |
| | 2 GHz | 1.38 w/kg | 1.25 w/kg |
| 0 mm | 1.9 GHz | 2.26 w/kg | 1.83 w/kg |
| | 1.95 GHz | 2.36 w/kg | 2 w/kg |
| | 2 GHz | 2.45 w/kg | 2.24 w/kg |

In some other embodiments, the switch 60 may alternatively include a single-pole multi-throw switch. In this case, the switch 60 includes a movable end part and three non-movable end parts. An end that is of the movable end part and that is far away from the non-movable end part is connected to the first feed 31, and ends that are of the three non-movable end parts and that are away from the movable end part are respectively connected to the first phase shifter 71, the second phase shifter 72, and the third phase shifter 73. When the movable end part is connected to different non-movable end parts in a switchable manner, the first phase shifter 71, the second phase shifter 72, or the third phase shifter 73 is connected to the second feeder 50, so as to adjust different phases of the medium- and high-band radio frequency signal fed by the first feed 31 into the second feed point 201.

In the communication device 1000 shown in this embodiment, by controlling the first single-pole single-throw switch 61, the second single-pole single-throw switch 62, and the third single-pole single-throw switch 63 to be turned on and turned off, the first phase shifter 71, the second phase shifter 72, or the third phase shifter 73 can be connected to the second feeder 50, so that the first feed 31 can separately excite the first radiator 10, or simultaneously excite the first radiator 10 and the second radiator 20, and a phase difference between the medium- and high-band radio frequency signals fed by the first feed 31 into the first radiator 10 and the second radiator 20 can be further adjusted, so as to control switching of an operating mode of the antenna 610. In addition, a current distribution status of the currents near the first radiator 10 and the second radiator 20 can be changed. This helps improve antenna efficiency and beside head and hand performance of the antenna, and optimize a specific absorption characteristic of the antenna 610, thereby improving antenna performance of the communication device 1000, improving radio performance in an actual use scenario of a user, and improving use experience of the user.

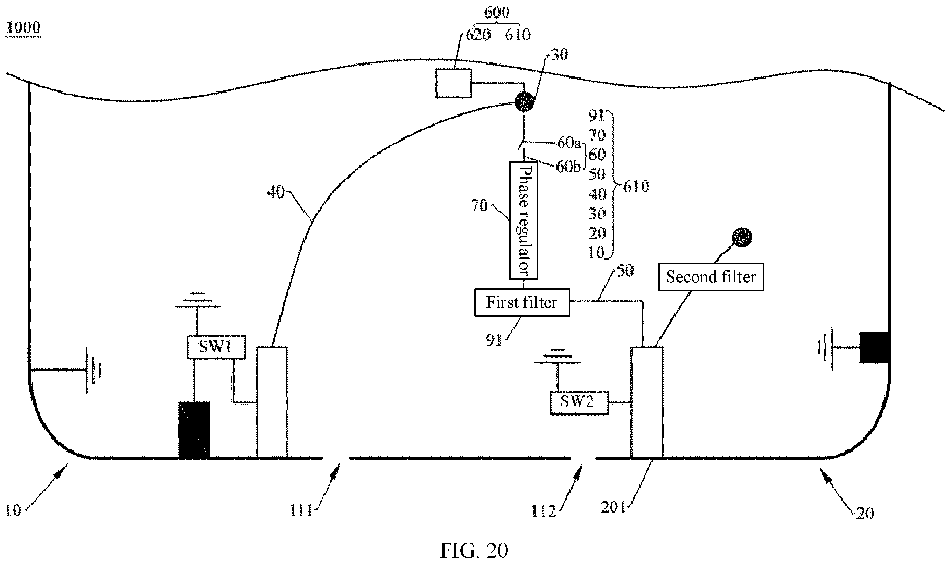

FIG. 20 is a sixth schematic diagram of a partial structure of a communication device 1000 according to an embodiment of this application.

A difference between the communication device 1000 in this embodiment and the communication device 1000 in the fourth embodiment lies in that the radio frequency front-end 620 includes a phase regulator 70, and the phase regulator 70 is disposed on the second feeder 50. The phase regulator 70 is connected between the switch 60 and the first filter 91, to adjust a phase of a medium- and high-band radio frequency signal fed by the first feed 31 into the second feed point 201. One end of the phase regulator 70 is connected to the non-movable end part 60b of the switch 60, and the other end is connected to the first filter 91. For example, the phase regulator 70 has a plurality of phase adjustment values, for example, 0°, 90°, and 180°.

When the switch 60 is turned off, the movable end part 60a of the switch 60 is not connected to the non-movable end part 60b, and the antenna 610 is in the second operating mode. In this case, the first feed 31 can feed the first radiator 10 through the first feeder 40, but cannot feed the second radiator 20 through the second feeder 50. It may be understood that a status of the communication device 1000 in this case is the same as a status of the communication device 1000 obtained when the switch 60 is turned off in the fifth embodiment. Details are not described herein again.

When the switch 60 is turned on, the movable end part 60a of the switch 60 is connected to the non-movable end part 60b, and the first feed 31 may simultaneously feed the first radiator 10 and the second radiator 20 through the first feeder 40 and the second feeder 50. Specifically, the first feed 31 feeds a radio frequency signal into the first radiator 10 through the first feeder 40, and feeds a radio frequency signal into the second radiator 20 through the second feeder 50.

In this case, the phase regulator 70 is connected to the second feeder 50, and the phase regulator 70 may adjust the phase of the medium- and high-band radio frequency signal fed by the first feed 31 into the second feed point 201. It may be understood that, when the phase regulator 70 adjusts the phase of the medium- and high-band radio frequency signal fed by the first feed 31 into the second radiator 20 by 0°, a status of the communication device 100 is the same as a status obtained when the first single-pole single-throw switch 61 is turned on (that is, when the antenna 610 is in the first operating mode) in the fifth embodiment. When the phase regulator 70 adjusts the phase of the medium- and high-band radio frequency signal fed by the first feed 31 into the second radiator 20 by 90°, a status of the communication device 100 is the same as a status obtained when the second single-pole single-throw switch 62 is turned on (that is, when the antenna 610 is in the second operating mode) in the fifth embodiment. When the phase regulator 70 adjusts the phase of the medium- and high-band radio frequency signal fed by the first feed 31 into the second radiator 20 by 180°, a status of the communication device 100 is the same as a status obtained when the third single-pole single-throw switch 63 is turned on (that is, when the antenna 610 is in the third operating mode) in the fifth embodiment. Details are not described herein again.

In the communication device 1000 shown in this embodiment, on a premise that the first radiator 10 and the second radiator 20 of the antenna 610 are coupled to each other, by controlling the switch 60 to be turned on and turned off, the phase regulator 70 can be connected to the second feeder 50, so that the first radiator 10 can be separately excited, or the first radiator 10 and the second radiator 20 can be simultaneously excited, and a phase difference between the radio frequency signals fed by the first feed 31 into the first radiator 10 and the second radiator 20 can be further adjusted, so as to control switching of an operating mode of the antenna 610. In addition, a current distribution status of the currents near the first radiator 10 and the second radiator 20 can be changed. This helps improve antenna efficiency and beside head and hand performance of the antenna, and optimize a specific absorption characteristic of the antenna 610, thereby improving antenna performance of the communication device 1000, improving radio performance in an actual use scenario of a user, and improving use experience of the user.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An antenna, comprising a first radiator, a second radiator, a first feed, a first feeder, and a second feeder, wherein the first feed is configured to connect to a radio frequency front-end, and the first feed is electrically connected to the first radiator through the first feeder, and is electrically connected to the second radiator through the second feeder; and
when the antenna is in a first operating mode, the first feed feeds a radio frequency signal into the first radiator and the second radiator, the first radiator and the second radiator receive radio frequency signals with a same phase, the first radiator and the second radiator are coupled to each other, and single resonance is generated.

2. The antenna according to claim 1, wherein the antenna further comprises a switch, and the switch is disposed on the second feeder, and is connected between the first feed and the second radiator; and
when the switch is turned off, the antenna is in a second operating mode, the first feed feeds the radio frequency signal into the first radiator, and the first radiator is coupled to and excites the second radiator.

3. The antenna according to claim 2, wherein the antenna further comprises a plurality of phase shifters, the plurality of phase shifters are disposed in parallel on the second feeder, and are connected between the switch and the second radiator, phase adjustment values of the plurality of phase shifters are different, and the switch is connected to different phase shifters in a switchable manner, to adjust a phase of the radio frequency signal fed by the first feed into the second radiator.

4. The antenna according to claim 3, wherein there are three phase shifters, a phase adjustment value of one of the phase shifters is 0 degree, a phase adjustment value of one of the phase shifters is 90 degrees, and a phase adjustment value of one of the phase shifters is 180 degrees.

5. The antenna according to claim 2, wherein the antenna further comprises a phase regulator, and the phase regulator is disposed on the second feeder, and is connected between the switch and the second radiator; and
when the switch is turned on, the phase regulator adjusts a phase of the radio frequency signal fed by the first feed into the second radiator.

6. The antenna according to any one of claims 1 to 5, wherein the first feed is a full-band feed.

7. The antenna according to any one of claims 1 to 4, wherein the first feed is a medium- and high-band feed, the antenna further comprises a second feed and a third feeder, the second feed is configured to connect to the radio frequency front-end, the second feed is electrically connected to the second radiator through the third feeder, and the second feed is a low-band feed.

8. The antenna according to claim 7, wherein the antenna further comprises a first filter and a second filter, the first filter is disposed on the second feeder, and is connected between the first feed and the second radiator, to filter a low-band radio frequency signal, and the second filter is disposed on the third feeder, and is connected between the second feed and the second radiator, to filter a medium- and high-band radio frequency signal.

9. The antenna according to any one of claims 1 to 8, wherein the antenna further comprises a first tuning circuit, one end of the first tuning circuit is grounded, the other end is connected to the first radiator, and the first tuning circuit is configured to adjust an electrical length of the first radiator.

10. The antenna according to claim 9, wherein the first tuning circuit comprises a plurality of different first tuning elements and a first switching switch, the plurality of different first tuning elements are all connected to the first radiator, one end of the first switching switch is grounded, and the other end is connected to the different first tuning elements in a switchable manner, to adjust the electrical length of the first radiator.

11. The antenna according to any one of claims 1 to 10, wherein the antenna further comprises a second tuning circuit, one end of the second tuning circuit is grounded, the other end is connected to the second radiator, and the second tuning circuit is configured to adjust an electrical length of the second radiator.

12. The antenna according to claim 11, wherein the second tuning circuit comprises a plurality of different second tuning elements and a second switching switch, the plurality of different second tuning elements are all connected to the second radiator, one end of the second switching switch is grounded, and the other end is connected to the different second tuning elements in a switchable manner, to adjust the electrical length of the second radiator.

13. A communication device, comprising a radio frequency front-end and the antenna according to any one of claims 1 to 12, wherein the radio frequency front-end is connected to a first feed, and is configured to: feed a radio frequency signal into the antenna, and/or receive a radio frequency signal received by the antenna.

14. The communication device according to claim 13, wherein the communication device comprises a frame, the frame comprises a first metal segment and a second metal segment that are spaced from each other, the first metal segment forms a first radiator, and the second metal segment forms a second radiator.

15. The communication device according to claim 13, wherein the communication device comprises a frame, the frame is made of a non-metal material, and a first radiator and a second radiator are spaced from each other, and are both disposed against the frame.
